# EUROPEAN PATENT SPECIFICATION

(11) **EP 3 951 519 B1**
(45) Date of publication and mention of the grant of the patent: **18.12.2024**
(21) Application number: 20779668.1
(22) Date of filing: 05.02.2020
(51) Int. Cl.: G05B 19/05, G06F 8/00, G06F 8/33, G06F 8/34, G06F 8/73

(54) **DEVELOPMENT SUPPORT DEVICE, METHOD FOR CONTROLLING DEVELOPMENT SUPPORT DEVICE, INFORMATION PROCESSING PROGRAM, AND RECORDING MEDIUM**
ENTWICKLUNGSUNTERSTÜTZUNGSVORRICHTUNG, VERFAHREN ZUR STEUERUNG EINER ENTWICKLUNGSUNTERSTÜTZUNGSVORRICHTUNG, INFORMATIONSVERARBEITUNGSPROGRAMM UND AUFZEICHNUNGSMEDIUM
DISPOSITIF DE SUPPORT DE DÉVELOPPEMENT, PROCÉDÉ PERMETTANT COMMANDER UN DISPOSITIF DE SUPPORT DE DÉVELOPPEMENT, PROGRAMME DE TRAITEMENT D'INFORMATIONS ET SUPPORT D'ENREGISTREMENT

(30) Priority: 28.03.2019 JP 2019064684
(43) Date of publication of application: 09.02.2022
(73) Proprietor: OMRON CORPORATION, Kyoto, Kyoto 600-8530 (JP)
(72) Inventor: KAGAWA, Tetsuo, Kyoto-shi, Kyoto 600-8530 (JP); NAGAO, Kenjiro, Kyoto-shi, Kyoto 600-8530 (JP)
(74) Representative: Becker, Eberhard
(86) International application number: PCT/JP2020/004316
(87) International publication number: WO 2020/195195

(56) References cited:
- WO-A1-2018/051441
- WO-A1-2018/051441
- JP-A- 2005 092 676
- JP-A- 2005 352 612
- JP-A- 2005 352 612
- JP-A- 2008 276 526
- JP-A- 2008 276 526
- JP-A- 2009 176 178
- JP-A- 2017 142 767
- JP-A- 2017 142 767

## Description

### BACKGROUND

### Technical Field

The present invention relates to a development support device, a method for controlling development support device, an information processing program, and a recording medium that support a user to write a program executed by a controller.

### Related Art

Conventionally, there is known a development support device for supporting development of a control system using an industrial controller such as a programmable controller (programmable logic controller, abbreviated to "PLC" hereinafter). For example, Patent Literature 1 described below discloses a development support device including a variable table showing a variable name, an internal memory address, and an I/O comment.

Patent literature WO 2018/051441 A1 relates to a ladder program editing assistance device that causes a display unit to display a plurality of circuit elements constituting a ladder program, as symbols displayed in a region between a positive bus bar and a negative bus bar in the ladder program, and edits the ladder program. The ladder program editing assistance device is provided with: the display unit which displays a ladder program; and an editing control unit which selects, as a target to be edited, a selection range in the ladder program displayed by the display unit, and displays identification information about the circuit elements included in the selection range in the ladder program, said identification information being displayed in a preset display order in list form on the display unit.

Patent literature JP 2008-276526 A relates to a program development support device equipped with: a format correction means to match a format of the variable table applied to a registration request, to the format of the variable table of the program device corresponding to the own device by applying the format correction processing for known item deletion processing, address prefix conversion processing, and the like, according to a model of the programmable device judged by the model judging means; a table write means to write the variable included in the variable table format matched by the format correction means, in the variable table for the own device.

Patent literature JP 2017-142767 A relates to a variable and communication program generation unit that generates a communication program or the like for a control device to obtain storage data at a prescribed address of another model of a control device on the basis of a symbol table or the like input by a symbol table input unit. The prescribed address is an address related to any symbol data on the symbol table, the address is converted into an address corresponding to a communication protocol used in communication between the two control devices, and by using the conversion address the communication program is generated.

### [Literature of related art]

### [Patent literature]

Patent Literature 1: Japanese Patent Laid-Open No. 2005-352612

### SUMMARY

### [Problems to be Solved]

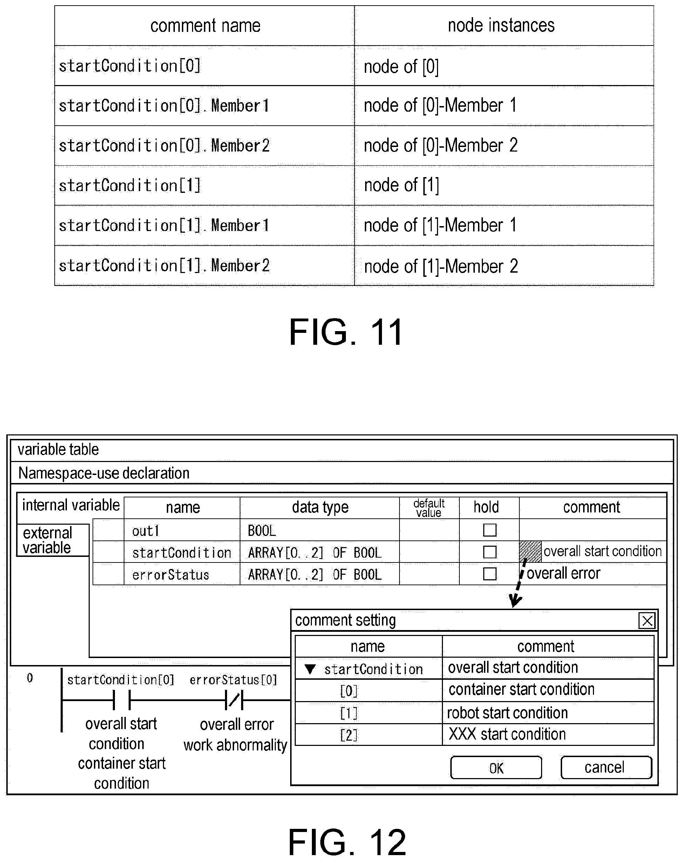

However, the development support device of the related art described above has a problem of low convenience, since the user needs to perform a plurality of user operations to check a comment on a "variable which can be denoted as a descendant node in a tree data structure having a certain variable as an ancestor node". For example, a "variable which can be denoted as a descendant node in a tree data structure having a certain variable as an ancestor node" is an "array element of an array type variable" which can be denoted as a child node in a tree data structure having the array type variable as a parent node. In addition, a "member of a structure type variable" which can be denoted as a child node in a tree data structure having the structure type variable as a parent node is also an example of a "variable which can be denoted as a descendant node in a tree data structure having a certain variable as an ancestor node". Hereinafter, with reference to FIG. 12, there is provided a description of an operation performed by a user when the user is to check a comment on an array element of an array type variable by using a development support device in the related art.

FIG. 12 is a diagram illustrating an operation performed by a user in a case of checking a comment on an array element of an array type variable by using a development support device in the related art. On a "variable table screen" displayed by the development support device in the related art illustrated in FIG. 12, a comment reading "overall start condition" is displayed for an array type variable itself named "startCondition". Similarly, a comment reading "overall error" is displayed for an array type variable itself named "errorStatus".

However, no comment on each array element [0], [1], or [2] of the array type variable named "startCondition" is displayed on the "variable table screen". Similarly, no comment on each array element [0], [1], or [2] of the array type variable named "startCondition" is displayed on the "variable table screen".

As illustrated in FIG. 12, the user needs to perform the following operations when the user tries to check comments on respective array elements of the array type variable named "startCondition". That is, the user has to press a soft button displayed on a comment column of the array type variable named "startCondition" to display a "comment setting" dialog for the respective array elements of the array type variable named "startCondition". In the "comment setting" dialog, a comment (container start condition, robot start condition, or XXX start condition) for each array element [0], [1], or [2] of the array type variable named "errorStatus" is displayed.

Similarly, when the user tries to check comments on the respective array elements of the "errorStatus" variable, the user has to press a soft button of a comment column of the "errorStatus" variable to display a "comment setting" dialog for the respective array elements of the "errorStatus" variable.

As described above, the development support device in the related art is not capable of displaying a comment on a "variable which can be denoted as a descendant node in a tree data structure having a certain variable as an ancestor node", such as an array 0element of an array type variable and a member of a structure type variable, to a user in a table form. For example, the development support device in the related art is not capable of displaying comments on respective array elements of "startCondition" which is an array type variable and comments on respective array elements of "errorStatus" which is an array type variable, to a user in a table form. Hence, when the user tries to check or edit a comment on a "variable which can be denoted as a descendant node in a tree data structure having a certain variable as an ancestor node", the development support device in the related art has problems of low user convenience and low operability.

According to an aspect of the present invention, the present invention is made with consideration for the problems, and an object thereof is to realize a development support device or the like that enables a user to easily check and easily edit a comment on a "variable which can be denoted as a descendant node in a tree data structure having a certain variable as an ancestor node", such as an array element of an array type variable and a member of a structure type variable.

### [Means to Solve Problems]

The invention is set out in the appended set of claims. The following disclosure serves a better understanding of the present invention. In order to solve the above-described problems, a development support device according to an aspect of the present invention supports a user to write a program executed by a controller and includes: an operation receiving unit that receives a user operation indicating an instruction to perform an external output of comments on variables used in the program, the comments being optionally attachable together with definitions of the variables by the user; and an output unit that outputs a comment on each of a plurality of second variables of the variables as a data format file which is editable in at least one of a text editor and spreadsheet software, the second variables being denotable as a descendant node in a tree data structure having a first variable as an ancestor node, by associating the comment with a name of the first variable and discrimination information for individually discriminating between the plurality of second variables with respect to the first variable, when the operation receiving unit receives the user operation.

In order to solve the above-described problems, there is provided a control method according to one aspect of the present invention controls a development support device that supports a user to write a program executed by a controller, the control method including: an operation receiving step of receiving a user operation indicating an instruction to perform an external output of comments on variables used in the program, the comments being optionally attachable together with definitions of the variables by a user; and an outputting step of outputting a comment on each of a plurality of second variables of the variables as a data format file which is editable in at least one of a text editor and spreadsheet software, the second variables being denotable as a descendant node in a tree data structure having a first variable as an ancestor node, by associating the comment with a name of the first variable and discrimination information for individually discriminating between the plurality of second variables with respect to the first variable, when the user operation is received in the operation receiving step.

In addition, an information processing program and a computer-readable recording medium having the information program recorded therein also belongs to the technical scope of the present invention, wherein the information processing program for causing a computer to function as the development support device, the information processing program causing a computer to function as the units.

### [Effects]

According to an aspect of the present invention, a development support device, a method for controlling development support device, an information processing program, and a recording medium achieve effects of enabling a user to easily check and easily edit a comment on a "variable which can be denoted as a descendant node in a tree data structure having a certain variable as an ancestor node", such as an array element of an array type variable and a member of a structure type variable.

### BRIEF DESCRIPTION OF THE DRAWINGS

FIG. 1 is a block diagram illustrating a configuration of main parts of a development support device according to Embodiment 1 of the present invention.
FIG. 2 is a diagram illustrating an overall outline of a control system including the development support device in FIG. 1.
FIG. 3 is a diagram illustrating an overall outline of processes which are executed by the development support device in FIG. 1.
FIG. 4 is a flowchart illustrating an example of an exporting process which is executed by the development support device in FIG. 1.
FIG. 5 is a diagram illustrating an example of variables other than element variables, the variables being stored in a first variable definition table.
FIG. 6 is a diagram illustrating an example of array elements of an array type variable which are stored in a second variable definition table and an example of element comments on the array elements of the array type variable in an output list L1.
FIG. 7 is a diagram illustrating an example of structure members of a structure type variable which are stored in the second variable definition table and an example of element comments on the structure members of the structure type variable in the output list L1.
FIG. 8 is a diagram illustrating an example of the structure members of the structure type variable which are array elements of an array type variable which are stored in the second variable definition table.
FIG. 9 is a diagram illustrating an example of element comments on the respective structure members of the structure type variable which are the array elements of the array type variable in the output list L1.
FIG. 10 is a flowchart illustrating an example of an importing process which is executed by the development support device in FIG. 1.
FIG. 11 is a diagram illustrating an example of map information.
FIG. 12 is a diagram illustrating an operation performed by a user in a case of checking a comment on an array element of an array type variable by using a development support device in the related art.

### DESCRIPTION OF THE EMBODIMENTS

### [Embodiment 1]

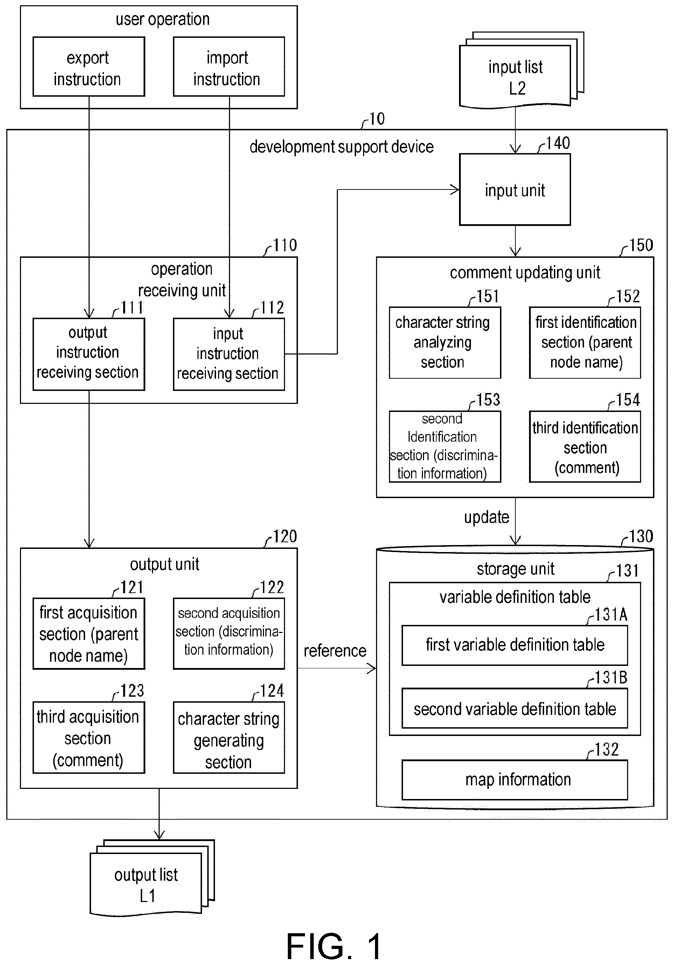

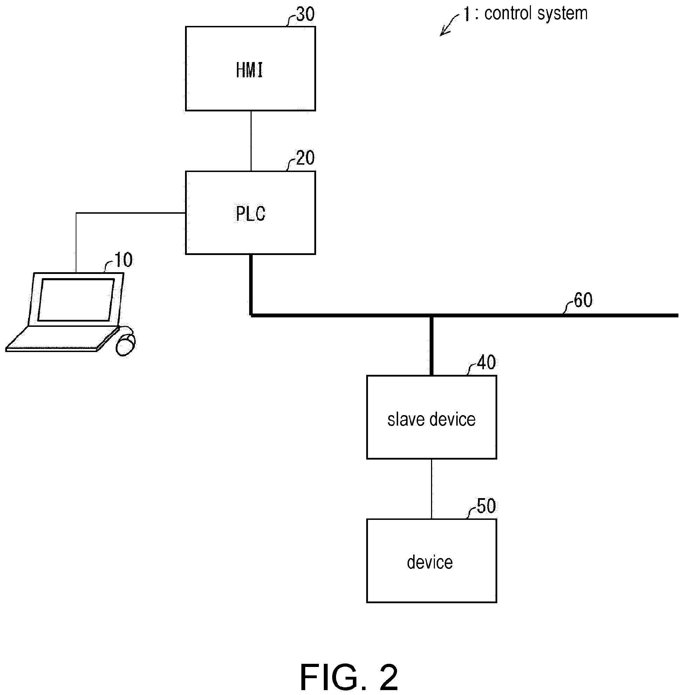

Hereinafter, an embodiment (hereinafter, referred to as "the embodiment") according to an aspect of the present invention will be described based on FIGS. 1 to 12. Note that, the same reference signs are assigned to the same or equivalent parts in the drawings, and thus the description thereof is not repeatedly provided. In the embodiment, a development support device 10 is described as a typical example of a development support device. In order for the development support device 10 according to an aspect of the present invention to be easily understood, first, an outline of a control system 1 including the development support device 10 is described with reference to FIG. 2.

### §1. Application Example

### (Overall Outline of Control System)

FIG. 2 is a diagram illustrating an overall outline of a control system 1 including the development support device 10. The control system 1 is a master-slave control system including a programmable logic controller (PLC) 20 as a master device and one or more slave devices 40 which are connected to the master device via a network (field network 60). The PLC 20 is called the "master device" in that the PLC 20 manages data transfer via the field network 60.

When a plurality of PLCs 20 are connected to each other via the field network 60, any one of the PLCs 20 functions as the master device, and the rest of the PLCs 20 function as slave devices, in some cases. In addition, another controller different from both the PLC 20 and the slave device 40 may function as the master device. That is, the "master device" and the "slave device" are defined focusing on a control function of data transfer via the field network 60, and thus there is no particular limitation to a type of information which is transmitted and received between the devices.

The PLC 20 entirely controls the control system 1. Specifically, the PLC 20 acquires information as input data from a device 50 which is an input instrument such as a sensor, via the slave device 40. The PLC 20 executes arithmetic processing by using acquired input data, in accordance with a user program installed in advance. The PLC 20 executes the arithmetic processing to determine control details which are to be transmitted to the device 50 which is an output device such as an actuator and output control data corresponding to the control details via the slave device 40 to the device 50.

Examples of the field network 60 include EtherCAT (registered trademark), PROFINET (registered trademark), MECHATROLINK (registered trademark)-III, Powerlink, SERCOS (registered trademark)-III, and CIP Motion via which various types of data that are received by the PLC 20 or transmitted by the PLC 20 are transferred. In addition, examples of the field network 60 may include EtherNet/IP (registered trademark), DeviceNet, CompoNet (registered trademark), and the like. Note that, the control system 1 will be described, hereinafter, in which data is transmitted and received between the PLC 20 and the slave device 40 or between a plurality of slave devices 40, by causing sequential transfer of data frames via the field network 60.

The slave device 40 is a slave device in a network (field network 60) where the PLC 20 is the master device, and the slave device is a device communication managing unit such as a communication coupler which manages communication with the device 50, for example. The slave device 40 may be a servo driver which is directly connected to the field network 60. For example, the device 50 is an input instrument such as a sensor or is an output instrument such as an actuator. One or more devices 50 are connected to the slave device 40 via communication cables.

The development support device 10 is connected to the PLC 20 via a communication cable which is a universal serial bus (USB) cable, for example. The development support device 10 is an information processing device for generating a user program which is executed by the PLC 20, various types of setting information with respect to the control system 1, or the like.

For example, the development support device 10 provides a development environment of the PLC 20 and provides an environment for a user to write (write-edit) a program such as a user program depending on a control purpose (for example, target line and process). The user writes program codes of a control program (user program) which is executed by the PLC 20, by using a development environment (programming tool) provided by the development support device 10. The development support device 10 may have a debug function and a simulation function in order to support a user to write-edit a control program executed by the PLC 20.

In addition, the development support device 10 may calculate and set a timing of acquiring (input refresh) a status value by the PLC 20 and a timing of updating (output refresh) an output value by the PLC 20, for example, The development support device 10 may monitor an operation status of the PLC 20, values of various types of data, or the like.

In other words, the development support device 10 may be a device that provides an integrated development environment supporting a 3D motion simulation, as well as programming of the PLC 20, configuration (configuration setting), debug, maintenance, and monitoring functions. In addition, the development support device 10 may set and adjust various types of parameters for the slave device 40.

The development support device 10 is configured of a general-purpose computer, typically. For example, an information processing program executed by the development support device 10 may be stored in a compact disk-read only memory (CD-ROM) or Digital Versatile Disc-Read Only Memory (DVD-ROM) (not illustrated) to be distributed. The program stored in the CD-ROM (or DVD-ROM) is read by a CD-ROM (or DVD-ROM) driving device (not illustrated)) and is stored in a hard disk or the like of the development support device 10. Otherwise, the development support device 10 may be configured to download the same program as the program stored in the CD-ROM, DVD-ROM, from a higher host computer or the like via a network.

As illustrated in FIG. 2, a human machine interface (HMI) 30 may be connected to the PLC 20 via a communication cable. The HMI 30 is a means for communicating information between a human and a machine, and specifically a means that enables a human to operate a machine (to give an instruction to the machine) or that enables a machine to inform a human of a current status result. Examples of the HMI 30 as a means that enables a human to give an instruction to a machine include a switch, a button, a handle, a dial, a pedal, a remote controller, a microphone, a keyboard, a mouse, and the like, and examples thereof as a means that enables a machine to inform a human of information on a current status result, or the like include a liquid-crystal display screen, a meter, a lamp, a speaker, and the like.

The HMI 30 includes a display unit, an operation unit, a communication unit which communicates with the PLC 20, and a control unit that controls the units. The HMI 30 can change various types of settings of the control system 1 (for example, PLC 20) in response to a user operation through the operation unit. In addition, the display unit of the HMI 30 displays predetermined information on the control system 1.

Examples of a program that a user writes and edits using a development environment provided by the development support device 10 include a user program, a motion computing program, a sequence instruction computing program, and the like. The "user program" is written depending on a control target (for example, target line and process) of a user. The development support device 10 generates a user program by compiling a ladder program (source program) written in ladder logic (ladder language) or the like. The ladder logic is an approach to describing a logic circuit and is a programming language widely employed in most PLCs. For example, the user program is generated in an object program format which is executable by a microprocessor installed in the PLC 20. The "motion computing program" is a program that is executed in response to an instruction issued by a user program and calculates a command value that is output for a motor driver such as a servo motor driver and a pulse motor driver whenever execution thereof is performed. The "sequence instruction computing program" is called when a predetermined sequence instruction used in the user program is executed, and the sequence instruction computing program is executed to realize contents of the instruction.

The development support device 10 outputs comments set by a user on respective elements (element variables or second variables) of a certain variable (first variable), as a data format file (output list L1 described later) which is editable in at least one of a text editor and spreadsheet software. For example, the respective elements of the variable are respective array elements (respective array members) of an array type variable or respective structure members of a structure type variable.

For example, when a user designates a variable, the development support device 10 outputs comments on respective elements of the variable, as a data format file which is editable in spreadsheet software, such as a Microsoft (registered trademark) Excel (registered trademark) file.

Consequently, the user can easily check contents of the output list L1 or easily edit (update) the contents of the output list L1, using the spreadsheet software such as Excel (registered trademark). The user can enjoy high browsability and operability of the spreadsheet software such as Excel (registered trademark) and can browse and edit the comments attached to the respective elements of the variable.

In addition, the user can copy and paste the output list L1 output by the development support device 10 to generate one or more lists L1(1), L1(2), L1(3), to L1(n) ("n" is a "natural number of 1 or larger"). The user can write and manage comments on respective elements of a variable in each of a plurality of languages for each of a plurality of lists L1(1), L1(2), L1(3), to L1(n), by writing the comments on the respective elements of the variable in each of the plurality of languages.

For example, regarding an array type variable v1 designated by the user, the development support device 10 outputs comments on respective array elements of the array type variable v1, in a data format output list L1 (v1) which is editable in at least one of a text editor and spreadsheet software, the user copies and pastes the output list L1 (v1) to generate lists L1(v1)(1), L1(v1)(2), L1(v1)(3), to L1(v1)(n). For example, the user writes the comments on the respective array elements of the array type variable v1 in the list L1(v1)(1) in English. For example, the user writes the comments on the respective array elements of the array type variable v1 in the list L1(v1)(2) in Japanese. For example, the user writes the comments on the respective array elements of the array type variable v1 in the list L1(v1)(3) in Chinese. For example, the user writes the comments on the respective array elements of the array type variable v1 in the list L1(v1)(n) in Spanish.

Consequently, the development support device 10 allows "a user to prepare comments on respective elements (element variables or second variables) of a certain variable (first variable) in each of a plurality of languages". In addition, a user can easily manage a plurality of comments (for example, the above-described lists L1(v1)(1), L1(v1)(2), L1(v1)(3), to L1(v1)(n)) which are each written in a plurality of languages.

In addition, the development support device 10 can import a file (input lists L2 described later) edited by a user using the spreadsheet software such as Excel (registered trademark). For example, the development support device 10 imports the output lists L1 updated by a user as the input lists L2. The development support device 10 updates comments on respective elements which are stored in a storage unit of the device, with comments attached to the respective elements (for example, respective array elements or respective structure members) of a variable (for example, array type variable or structure type variable) in the input lists L2. Besides, the development support device 10 displays the comments (comments updated according to the updated output lists L1) attached to the respective array elements such that the user can find meanings of the respective array elements of the array type variable, at a location where the array type variable is used in a program, for example.

Consequently, regarding the comments displayed by the development support device 10, the user can easily switch between languages in which the comments are written, for example, by switching between the input lists L2 which are imported into the development support device 10. The user causes the development support device 10 to import the list L1(2) in which the comments are written in Japanese, instead of the list L1(1) in which the comments are written in English, and thereby the comments written in English can be switched to the comments written in Japanese.

When a plurality of lists L1(1) to L1(n) in which comments are written in a plurality of languages are prepared in advance, a user can switch between written languages of comments which are displayed by the development support device 10, only by switching between lists which are imported into the development support device 10.

The output list L1 output by the development support device 10 does not need to be a file which is editable by Excel (registered trademark), and the development support device 10 outputs the data format output list L1 suitable for being edited and used by an external device or software.

### (Description of Terms)

In the following description, a "variable which can be denoted as a descendant node in a tree data structure (tree) having a certain variable as an ancestor node", such as a variable which is an array element or a structure member, may be referred to as an "element variable (second variable)".

Similarly, a comment on a "variable which can be denoted as a descendant node in a tree having a certain variable as an ancestor node" may be referred to as an "element comment". That is, the comment on the "element variable" may be referred to as the "element comment" and is distinguished from a "comment" which is a comment on a "variable other than the element variable". For example, the "element comment" is a comment which can be set on an array element or a structure member, when a type of certain variable is at least one of an array type and a structure type in variable declaration that is used in a program development environment provided by the development support device 10. That is, the "element comment" is a comment on a variable (element variable or second variable) which can be denoted as a descendant node of a tree having a certain variable (first variable) as an ancestor node.

The "variable table screen" is an editing screen on which a variable used in a program is described in a table form, and a variable name, a data type of variable, a comment, or the like of the variable can be checked and edited (updated) thereon.

### §2. Configuration Example

As described above, the outline of the control system 1 is described with reference to FIG. 2. Next, the development support device 10 will be described in detail. First, an organized description of an outline of the development support device 10 to be described in detail with reference to FIG. 1 or the like hereinafter is as follows.

That is, the development support device 10 is a development support device that supports a user to write a program executed by the PLC 20 (controller). The development support device 10 includes an operation receiving unit 110 (particularly, output instruction receiving section 111) that receives a user operation indicating an instruction to perform an external output of comments on variables used in the program, the comments being optionally attachable by a user together with definitions of the variables, and an output unit 120 that outputs an element comment (comment) on each of a plurality of element variables (second variables) of the variables as a data format file (output list L1) which is editable in at least one of a text editor and spreadsheet software, the element variables being denotable as a descendant node in a tree data structure (tree) having a first variable as an ancestor node, by associating the comment with a name of the first variable and discrimination information for individually discriminating between the plurality of second variables with respect to the first variable, when the operation receiving unit 110 receives the user operation.

According to this configuration, the development support device 10 outputs an element comment on each of the plurality of second variables as a data format file which is editable in at least one of the text editor and the spreadsheet software, by associating the element comment with the name of the first variable and the discrimination information.

Consequently, the development support device 10 achieves an effect of enabling a list of element comments on the plurality of respective second variables to be output in a form which is easily checked and easily edited by a user. In other words, the development support device 10 achieves an effect of enabling a user to easily check and easily edit the element comments on the plurality of respective second variables.

In addition, the development support device 10 outputs the element comments as a data format file which is editable by a user in spreadsheet software or the like, thus, achieving an effect of enabling the user to write and manage the element comments in each of a plurality of languages using the file. For example, the user can copy and paste the output list L1 output by the development support device 10 to generate a plurality of lists L1(1) to L1(n) and can write and manage the element comments in each of the plurality of languages for each of the plurality of lists L1(1) to L1(n). That is, the development support device 10 achieves an effect of enabling a user to easily generate and easily manage the element comments written in each of the plurality of languages on the plurality of respective second variables.

In the development support device 10, the first variable may be an array type variable or a structure type variable, and each of the plurality of second variables may be an array element of the array type variable or a member of the structure type variable.

According to this configuration, the development support device 10 outputs the element comment on each of the plurality of second variables which are array elements of the array type variable or members of the structure type variable, by associating the element comment with the discrimination information and the name of the first variable which is the array type variable or the structure type variable.

Consequently, the development support device 10 achieves an effect of enabling a list of element comments on the plurality of respective second variables which are the array elements of the array type variable or the members of the structure type variable to be output in a form which is easily checked and easily edited by a user.

In the development support device 10, the output unit 120 may output the element comment on each of the plurality of second variables by associating the element comment with one character string containing the name of the first variable and the discrimination information.

According to this configuration, the development support device 10 outputs the element comment on each of the plurality of second variables as a data format file which is editable in the spreadsheet software or the like, by associating the element comment with one character string containing the name of the first variable and the discrimination information. For example, the development support device 10 outputs a list showing (A) the one character string containing the name of the first variable and the discrimination information and (B) the element comment, in a data format which is editable in the spreadsheet software or the like.

Specifically, the development support device 10 outputs the element comment on each of the plurality of second variables as a data format file which is editable in the spreadsheet software for example, by associating the element comment with one character string containing the name of the first variable and the discrimination information. In this case, the one character string containing the name of the first variable and the discrimination information is stored in one cell, and the element comment on each of the plurality of second variables is also stored in one cell. Hence, a user can check, at a glance, a relationship between the element comment on each of the plurality of second variables, the second variable to which the element comment is attached, and the first variable which is an ancestor node of the second variable. For example, the user is able to check, at a glance, the list formed by associating the one character string containing the name of the first variable and the discrimination information with one character string indicating the element comment in contiguous columns.

Consequently, the development support device 10 has an effect of enabling a list of element comments on the plurality of respective second variables to be output in a form which is very highly recognizable and easily edited by a user.

In the development support device 10, the discrimination information contains path information indicating a path from the first variable to each of the plurality of second variables in the tree data structure. The path information provides each of one or more parent-child relationships from the first variable to each of the plurality of second variables in the tree data structure, in accordance with the following rules. That is, the path information indicates (1) a parent-child relationship using brackets ([]), when a variable corresponding to a parent node is an array type variable and a variable corresponding to a child node is an array element of the array type variable, in the parent-child relationship. In addition, the path information indicates (2) a parent-child relationship using a period (.), when a variable corresponding to a parent node is a structure type variable and a variable corresponding to a child node is a member of the structure type variable, in the parent-child relationship. Path information of a certain element variable is "information for identifying a descendant node corresponding to the certain element variable in a tree having the certain element variable as the descendant node" and contains "information indicating a hierarchy of the descendant node corresponding to the certain element variable in the tree".

According to this configuration, the development support device 10 outputs the element comment on each of the plurality of second variables by associating the element comment with the discrimination information containing the path information and the name of the first variable. Besides, regarding each of one or more parent-child relationships from the first variable to each of the plurality of second variables, the path information distinguishes whether a parent and a child are an array type variable and an array element of the array type variable, respectively, or whether the parent and the child are a structure type variable and a member of the structure type variable, respectively.

Consequently, the development support device 10 achieves an effect of enabling the file to be output in a state where a user can check a relationship between the first variable and the plurality of second variables. For example, the development support device 10 achieves an effect of enabling the file to be output in a state where a user can distinguish between whether the second variables are array elements of the first variable which is the array type variable, whether the second variables are structure members of the first variable which is the structure type variable, whether the second variables are structure members of a predetermined structure type variable of the first variable which is an array type variable (structure type array) in which each of a plurality of structure type variables is an array element, and the like.

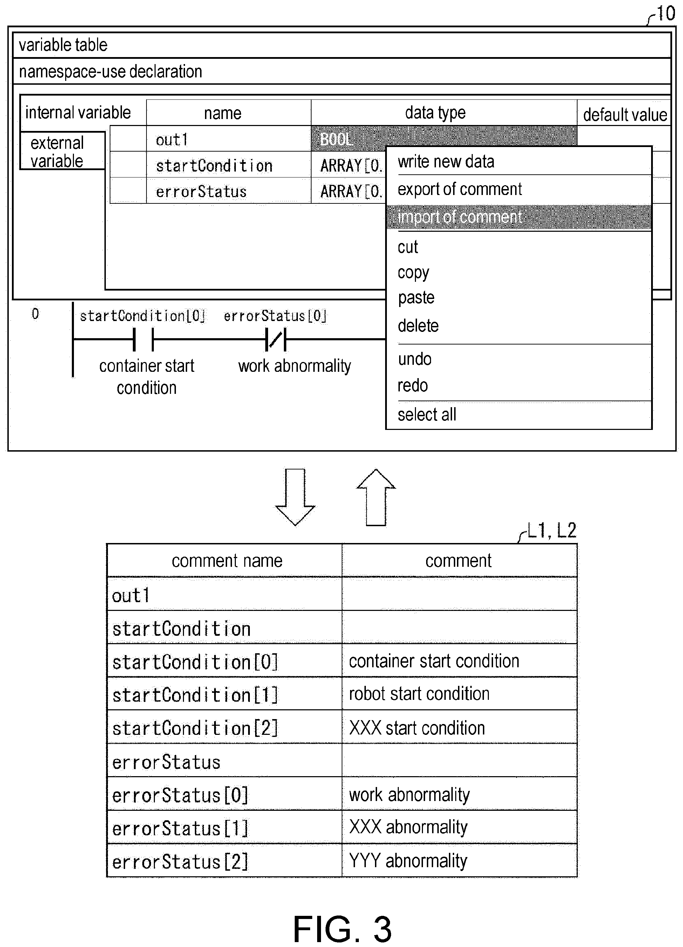

As described above, the outline of the development support device 10 is provided. Next, a configuration thereof will be described in detail with reference to FIG. 1, and then an outline of processes executed by the development support device 10 will be described with reference to FIG. 3.

### (Details of Development Support Device)

### (Major Difference from Development Support Device in the Related Art)

As described with reference to FIG. 12, the development support device in the related art is not capable of displaying element comments in a table format on a "variable table screen". For example, the development support device in the related art is not capable of displaying comments (element comments) on "variables (element variables) which can be denoted as a descendant node in a tree having a certain variable as an ancestor node", such as array elements of an array type variable and structure members of a structure type variable, on the "variable table screen" in a table form. Hence, the development support device in the related art has low convenience and operability for a user who tries to check or edit an element comment on each of a plurality of element variables.

Specifically, a user who tries to perform checking or the like of a comment on a "variable which can be denoted as a descendant node in a tree having a certain variable as an ancestor node" needs to select a variable corresponding to the ancestor node (for example, parent node) and then open a dialog of an element comment.

On the other hand, the development support device 10 outputs element comments on a plurality of respective element variables in a table-form list, particularly, in a data format table-form list (output list L1) which is editable in spreadsheet software or the like.

For example, regarding the respective array elements of the array type variable, the user can easily check element comments indicating meaning or the like attached to the respective array elements, by using the output list L1 output by the development support device 10. In addition, the user can write element comments in each of a plurality of languages for each of a plurality of lists L1(1) to L1(n) generated by copying and pasting the output list L1 output by the development support device 10, for example. The user can prepare a plurality of lists L1(1) to L1(n) in which element comments are written in each of a plurality of languages in advance, thereby, easily switching written languages of element comments which are displayed by the development support device 10, only by switching between lists which are imported into the development support device 10.

### (Detailed Configuration of Development Support Device)

FIG. 1 is a block diagram illustrating a configuration of main parts of the development support device 10. As illustrated in FIG. 1, the development support device 10 includes, as a functional block, the operation receiving unit 110, the output unit 120, a storage unit 130, an input unit 140, and a comment updating unit 150.

The development support device 10 may further include a programming support unit or the like (not illustrated) which provides an environment for programming a user program as a control program that is executed in the PLC 20 by a user depending on a control purpose, in addition to the above-described functional block. However, in order to secure conciseness of description, a configuration which is not directly related to the embodiment is omitted from the following description and the block diagram. However, the development support device 10 may include the omitted configuration according to an actual circumstance.

The operation receiving unit 110, the output unit 120, the input unit 140, and the comment updating unit 150 can be realized when a central processing unit (CPU) or the like reads and executes a program in a random-access memory (RAM) (not illustrated) or the like, the program being stored in a storage device (storage unit 130) realized by a read only memory (ROM), a non-volatile random-access memory (NVRAM), or the like. Hereinafter, the operation receiving unit 110, the output unit 120, the input unit 140, and the comment updating unit 150 will be each described.

The operation receiving unit 110 receives a user operation indicating an instruction to execute an outputting process (exporting process) of the output list L1 or a user operation indicating an instruction to execute an inputting process (importing process) of the input list L2. The operation receiving unit 110 includes the output instruction receiving section 111 and an input instruction receiving section 112.

The output instruction receiving section 111 receives the user operation indicating the instruction to execute the exporting process and informs the output unit 120 of the received user operation. The input instruction receiving section 112 receives the user operation indicating the instruction to execute the importing process and informs the input unit 140 of the received user operation.

The output unit 120 outputs a table-form list (output list L1) of comments (element comments) on "variables (element variables) which can be denoted as a descendant node of a tree having the first variable as an ancestor node", in response to the user operation received by the output instruction receiving section 111.

For example, regarding the first variable designated by the user operation, the output unit 120 identifies a plurality of element variables (second variables) "which can be denoted as a descendant node in a tree having the first variable as an ancestor node", with reference to a second variable definition table 131B. In addition, the output unit 120 acquires element comments on the plurality of respective identified element variables, with reference to the second variable definition table 131B. The output unit 120 outputs the element comments on the plurality of respective identified element variables in the data format output list L1 which is editable in spreadsheet software or the like, by associating the element comments with discrimination information for "individually discriminating between the plurality of identified element variables with respect to the first variable". In particular, the output unit 120 outputs the element comments on the plurality of respective element variables in the output list L1, by associating the element comments with the "name of the first variable" and the "discrimination information of the plurality of respective element variables". The output unit 120 includes a first acquisition section 121, a second acquisition section 122, a third acquisition section 123, and a character string generating section 124.

The first acquisition section 121 identifies the name of the first variable selected by a user in the "user operation received by the output instruction receiving section 111". The first acquisition section 121 may identify the name of the first variable selected by a user, with reference to a first variable definition table 131A or the second variable definition table 131B.

For example, the second acquisition section 122 individually identifies the plurality of element variables corresponding to the descendant nodes of the tree having the first variable as the ancestor node, by following the tree having the first variable as the ancestor node with reference to the second variable definition table 131B.

The second acquisition section 122 generates discrimination information for individually discriminating between the plurality of identified element variables with respect to the first variable, particularly, generates discrimination information containing path information for each of the plurality of identified element variables, with reference to the second variable definition table 131B. The second acquisition section 122 generates "discrimination information for individually discriminating between a plurality of descendant nodes (that is, a plurality of descendant nodes corresponding to the plurality of respective element variables) in the tree having the first variable as an ancestor node", as the discrimination information of the plurality of respective element variables.

The path information is "information indicating paths (one or more parent-child relationships) from the first variable to the plurality of individual element variables in the tree having the first variable as the ancestor node". In other words, the path information is information indicating one or more parent-child relationships which are present from "the first variable which is the ancestor node" to "the plurality of individual element variables which are the descendant nodes" in "the tree having the first variable as the ancestor node". The path information corresponds to "information indicating instances of descendant nodes corresponding to the respective element variables in the tree having the first variable as the ancestor node".

The second acquisition section 122 shows a parent-child relationship (relationship between a variable corresponding to a parent node and a variable corresponding to a child node) in discrimination information (particularly, path information), in accordance with the following rules, for example. That is, when a variable corresponding to a parent node is an array type variable, and a variable corresponding to a child node is an array element of the array type variable, the second acquisition section 122 provides the parent-child relationship using brackets ([]). In addition, when a variable corresponding to a parent node is a structure type variable, and a variable corresponding to a child node is a member of the structure type variable, the second acquisition section 122 provides the parent-child relationship using a period (.).

In addition, the third acquisition section 123 acquires element comments on the plurality of respective element variables identified by the second acquisition section 122 with reference to the second variable definition table 131B.

The character string generating section 124 generates the following character string for each of the plurality of element variables identified by the second acquisition section 122. That is, the character string generating section 124 generates one character string containing the name of the first variable identified by the first acquisition section 121 and "the discrimination information (containing path information for each of the plurality of element variables) for each of the plurality of element variables" generated by the second acquisition section 122. The one character string generated by the character string generating section 124 for each of the plurality of element variables is referred to as a "comment name".

The output unit 120 outputs "the element comments for the plurality of respective element variables" acquired by the third acquisition section 123, in the output list L1 which is editable in at least one of a text editor and spreadsheet software, by associating the element comments with the comment names of the plurality of respective element variables.

The input unit 140 takes in the input list L2 in response to the user operation (instruction to execute an importing process) received by the operation receiving unit 110. The input list L2 is a table-form list of element comments on "element variables which can be denoted as descendant nodes of a tree having a certain first variable as an ancestor node" and is the output list L1 having contents updated by a user.

The comment updating unit 150 updates element comments in the second variable definition table 131B of the storage unit 130, according to contents of the input list L2 taken in by the input unit 140. The comment updating unit 150 includes a character string analyzing section 151, a first identification section 152, a second identification section 153, and a third identification section 154.

The character string analyzing section 151 extracts a name of a first variable from the comment name of the input list L2 taken in by the input unit 140 and informs the first identification section 152 of the extracted name of the first variable. The first identification section 152 identifies the first variable from "the name of the first variable" extracted from the comment name of the input list L2. The first identification section 152 informs the second identification section 153 of the identified first variable.

The second identification section 153 acquires a "node instance" corresponding to "the comment name" of the input list L2, with reference to map information 132. Besides, the second identification section 153 identifies an element variable having an element comment stored in the input list L2, from the first variable identified by the first identification section 152 and "the node instance" acquired with reference to the map information 132.

Here, a naming rule of "the respective comment names" in the input list L2 is the same as the naming rule of "the comment names" in the output list L1. Consequently, the second identification section 153 may directly acquire discrimination information for discriminating between element variables having element comments stored in the input list L2, in the tree having the first variable as the ancestor node, from "the comment name" of the input list L2 without referring to the map information 132. In other words, the second identification section 153 may extract "discrimination information of an element variable having an element comment stored in the input list L2" from "the comment name" of the input list L2, the discrimination information containing "path information of the element variable having an element comment stored in the input list L2".

The third identification section 154 acquires an "element comment associated with the comment name in the input list L2", from the input list L2 taken in by the input unit 140. In other words, from the input list L2, the third identification section 154 acquires an "element comment in the input list L2" on an "element variable which is uniquely identified by the comment name of the input list L2".

The comment updating unit 150 updates the element comment on the element variable identified by the second identification section 153 in the second variable definition table 131B with the element comment acquired by the third identification section 154 from the input list L2.

The storage unit 130 is a storage device that stores various types of data which are used by the development support device 10. Moreover, the storage unit 130 may non-transitorily store (1) a control program, (2) an OS program, and (3) an application program for executing various types of functions of the development support device 10, which are executed by the development support device 10, and (4) various types of data which are read out when the corresponding application program is executed. The data of (1) to (4) is stored in, for example, a non-volatile storage device such as a read-only memory (ROM), a flash memory, an erasable programmable ROM (EPROM), an electrically EPROM (EEPROM (registered trademark)), or a hard disk drive (HDD). The development support device 10 may include a temporary storage unit (not illustrated). The temporary storage unit is a so-called working memory that temporarily stores data which is used in computation, a computation result, or the like during various types of processes which are executed by the development support device 10, and the temporary storage unit is configured of a volatile storage device such as a random-access memory (RAM). A storage device which stores a certain type of data is appropriately determined regarding an intended use of the PLC 20, convenience, costs, a physical constraint, or the like. The storage unit 130 further stores the variable definition tables 131 and the map information 132.

The variable definition table 131 includes the first variable definition table 131A in which a comment or the like of a variable other than the element variables is stored and the second variable definition table 131B in which an element comment or the like of an element variable is stored.

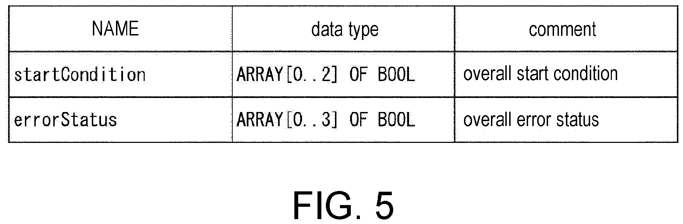

A set of "a variable name, a data type, a comment", and the like of the variable (for example, first variable) other than the element variables is stored in the first variable definition table 131A. In the first variable definition table 131A, a set of "a variable name, a data type, a comment", or the like of each of "variables other than the plurality of element variables" is stored in a table form as attributes of each of the "variables other than the plurality of element variables". The first variable definition table 131A will be described in detail with reference to FIG. 5.

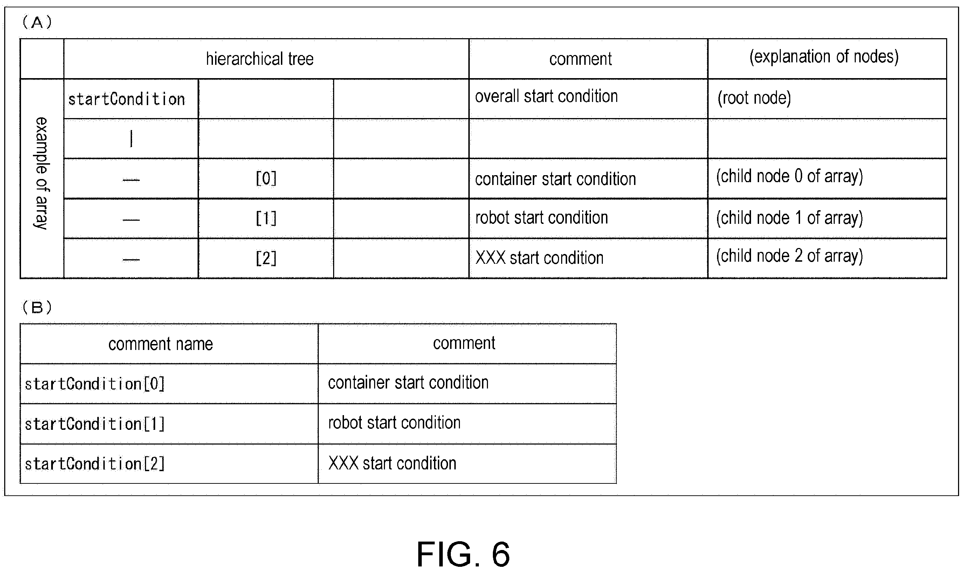

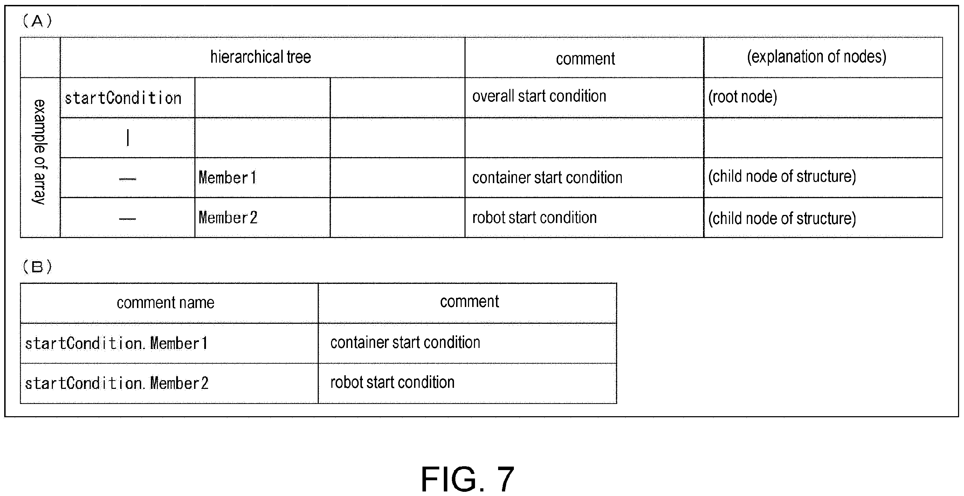

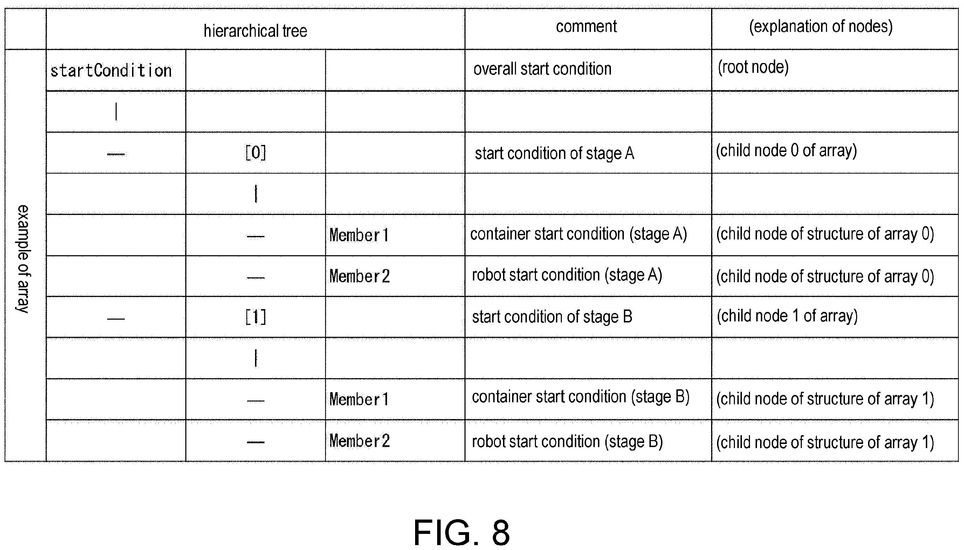

A name of a variable (first variable) corresponding to an ancestor node of a tree having a plurality of respective element variables as descendant nodes, a hierarchical structure of the tree, element comments, or the like for each of the plurality of element variables are stored in the second variable definition table 131B. In the second variable definition table 131B, relationships between a first variable and a plurality of respective element variables, discrimination information for individually discriminating between the plurality of element variables with respect to the first variable, instances of descendant nodes corresponding to the plurality of respective element variables in the tree, or the like may be stored. The second variable definition table 131B will be described in detail with reference to (A) of FIG. 6, (A) of FIG. 7, and FIG. 8.

The map information 132 is information associated with contents of the respective "comment names" in the input list L2 and "information indicating instances (node instances) of the plurality of respective element variables", and the map information 132 will be described in detail with reference to FIG. 11. As described above, the input list L2 shows element comments on the respective element variables in association with the comment names of the respective element variables.

The respective "comment names" in the input list L2, that is, "the comment names in the input list L2" of the respective element variables indicate a name of a first variable of the respective element variables and discrimination information (containing path information) of the respective element variables.

"The information indicating instances of descendant nodes of element variables" is information indicating "respective instances of a plurality of descendant nodes corresponding to the plurality of respective element variables in the tree having the first variable as the ancestor node". The second identification section 153 can find a relationship of a certain element variable with the first variable, by using the information indicating an instance of the certain element variable, thus, identifying the certain element variable in the second variable definition table 131B.

### §3. Operation Example

FIG. 3 is a diagram illustrating an overall outline of processes which are executed by the development support device 10. That is, the development support device 10 executes an exporting process to output the element comments on the respective element variables acquired with reference to the second variable definition table 131B, in a data format output list L1 which is editable in at least one of a text editor and spreadsheet software. In addition, the development support device 10 executes an importing process to update the element comments on the respective element variables in the second variable definition table 131B, according to the input list L2 that has been taken in.

### (Contents of Exporting Process)

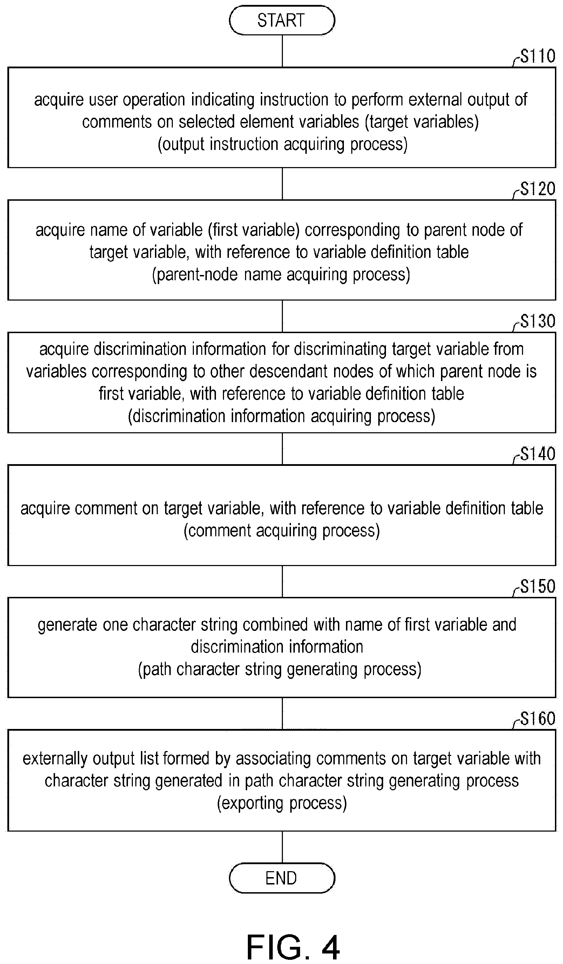

FIG. 4 is a flowchart illustrating an overall outline of an outputting process (exporting process) which is executed by the development support device 10. The output instruction receiving section 111 acquires a user operation indicating an instruction to execute an external output of element comments on respective elements (element variables, hereinafter, referred to as "target variables") of the selected first variable (output instruction acquiring process S110). That is, the output instruction receiving section 111 receives the user operation indicating the instruction to execute the exporting process.

The first acquisition section 121 acquires a name of a variable (that is, the first variable selected by a user) corresponding to an ancestor node of the target variables (parent-node name acquiring process S 120). The second acquisition section 122 acquires (generates) discrimination information for discriminating between the target variables from variables corresponding to other descendant nodes of which an ancestor node is the first variable, with reference to the second variable definition table 131B (discrimination information acquiring process S130).

For example, an array element [0] of an array type variable named "startCondition" is discriminated by "0" from other array elements (for example, [1] and [2]) of an array type variable named "startCondition". Consequently, the second acquisition section 122 acquires "0" as the discrimination information for discriminating the array element [0] of the array type variable: startCondition from the other array elements of the array type variable: startCondition, with reference to the second variable definition table 131B.

The third acquisition section 123 acquires element comments on the target variables with reference to the second variable definition table 131B (comment acquiring process S140). Besides, the character string generating section 124 generates one character string combined with the name of the first variable acquired by the first acquisition section 121 and the discrimination information acquired by the second acquisition section 122 (path character string generating process S 150).

The output unit 120 externally outputs the list (output list L1) formed by associating the comments on target variables acquired by the third acquisition section 123 with the character string generated in path character string generating process by the character string generating section 124 (exporting process S 160). The output unit 120 outputs the output list L1 as a data format file which is editable in at least one of the text editor and the spreadsheet software.

The process (particularly, exporting process) which is executed by the development support device 10 described above with reference to FIG. 4, that is, a control method executed by the development support device 10, can be summarized as follows. That is, the process (control method) executed by the development support device 10 is a method for controlling the development support device that supports a user to write a program executed by the PLC 20 (controller), the method including an operation receiving step (output instruction acquiring process S110) of receiving a user operation indicating an instruction to perform an external output of element comments on variables used in the program, the element comments being optionally attachable together with definitions of the variables by the user; and an outputting step (exporting process S160) of outputting the element comments on the plurality of respective second variables of the variables as a data format file which is editable in at least one of the text editor and the spreadsheet software, the second variables being denotable as the descendant node in the tree data structure (tree) having the first variable as the ancestor node, by associating the element comments with the name of the first variable and the discrimination information for individually discriminating between the plurality of second variables with respect to the first variable, when the user operation is received in the operation receiving step.

According to this configuration, in the control method, the element comments on the plurality of respective second variables are associated with the name of the first variable and the discrimination information and are output as a data format file which is editable in at least one of the text editor and the spreadsheet software.

Consequently, the control method achieves an effect of enabling a list of element comments on the plurality of respective second variables to be output in a form which is easily checked and easily edited by a user. In other words, the control method achieves an effect of enabling a user to easily check and easily edit element comments on the plurality of respective second variables.

In addition, the element comments are output as a data format file which is editable by a user using the spreadsheet software or the like, and thus the control method achieves an effect of enabling the user to write and manage the element comments in each of a plurality of languages using the file. That is, the control method achieves an effect of enabling a user to easily generate-manage the element comments written in each of the plurality of languages on the plurality of respective second variables.

### (Data Format)

### (Data Format Example of Variable Other Than Element Variables)

In the development support device 10, the variables other than the element variables, that is, the variables other than "variables which can be denoted as descendant nodes of a tree having a certain variable as an ancestor node", is stored in the following data format in the first variable definition table 131A, for example. That is, regarding the variables other than the element variables, sets of "a variable name, a data type, a comment", and the like of the respective variables are stored in a table form as attributes of the respective variables in the first variable definition table 131A.

FIG. 5 is a diagram illustrating an example of the variables other than element variables, the variables being stored in the first variable definition table 131A. That is, FIG. 5 illustrates an example of the variables other than "the variables which can be denoted as descendant nodes of a tree having a certain variable as an ancestor node", the variables being stored in the first variable definition table 131A.

As illustrated in FIG. 5, in the first variable definition table 131A, an array type variable named "startCondition" and an array type variable named "errorStatus" are stored in a table form together with attributes of the variables. That is, regarding the variables other than the element variables, variable names of the respective variables are stored in association with data types of the respective variables and comments on the respective variables in the first variable definition table 131A.

Regarding the variables other than "variables which can be denoted as descendant nodes of a tree having a certain variable as an ancestor node", the development support device 10 displays (visualizes) contents of the variables stored in the first variable definition table 131A, on the "variable table screen", for example.

### (Data Format Example 1 of Element Variables: Respective Array Elements of Array Type Variable)

On the other hand, in the development support device 10, "variables which can be denoted as descendant nodes of a tree having a certain variable as an ancestor node", that is, the element variables, are stored in the following data format in the second variable definition table 131B, for example. That is, in the second variable definition table 131B, each of the plurality of element variables is managed as a variable corresponding to each of a plurality of descendant nodes of a tree having a certain variable as an ancestor node. Information indicating a structure of the tree, particularly, information for identifying each of the plurality of descendant nodes corresponding to each of the plurality of element variables in the tree, is stored in the second variable definition table 131B. In addition, in the second variable definition table 131B, an element comment on each of the plurality of element variables is associated with each of the plurality of descendant nodes corresponding to each of the plurality of element variables.

FIG. 6 is a diagram illustrating an example ((A) of FIG. 6) of element variables which are stored in the second variable definition table 131B and an example ((B) of FIG. 6) of element comments on the element variables in the output list L1. Specifically, (A) of FIG. 6 illustrates an example in which element comments or the like on respective array elements are stored in the second variable definition table 131B, regarding the array elements (that is, [0], [1], and [2]) of the array type variable having the name of "startCondition".

The development support device 10 configures a tree in which array elements or structure members (element variables, that is, second variables) as the descendant nodes are arranged in a hierarchy with respect to the first variable (for example, first variable which is the array type variable or the structure type variable) corresponding to the ancestor node. For example, the development support device 10 manages the array elements [0], [1], and [2] of the array type variable: startCondition as child nodes of a tree having the array type variable: startCondition as a parent node.

The development support device 10 individually discriminates between the plurality of second variables (for example, array elements [0], [1], and [2]) corresponding to sibling nodes of a tree having the first variable (for example, array type variable: startCondition) as an ancestor node, in the following manner. That is, the development support device 10 individually discriminates between the plurality of second variables corresponding to the sibling nodes by giving the discrimination information ("0", "1", and "2" in the example illustrated in (A) of FIG. 6) for individually discriminating between the plurality of second variables with respect to the first variable to each of the plurality of second variables. The array elements [0], [1], and [2] corresponding to the sibling nodes of the tree having the array type variable: startCondition as the parent node are individually discriminated from other array elements corresponding to sibling nodes, by "0", "1", or "2" in a hierarchy showing child nodes.

Besides, the development support device 10 stores element comments on the respective element variables in association with "the respective descendant nodes in the tree which correspond to the respective element variables", in the second variable definition table 131B.

That is, in the second variable definition table 131B in (A) of FIG. 6, the array element: [0] of the array type variable: startCondition is stored as a child node of the tree having the array type variable: startCondition as the parent node. The element comment: "container start condition" on the array element: [0] of the array type variable: startCondition is associated with the child node denoting the array element: [0] in the tree.

In addition, contents in a column of "explanation of node" in the second variable definition table 131B can be considered as "information indicating instances of the respective descendant nodes corresponding to the element variables in the tree". In particular, the column of "explanation of node" shows information indicating instances of child nodes corresponding to respective element variables in the tree having the respective element variables as the child nodes. The column of "explanation of node" of the array element: [0] of the array type variable: startCondition provides that "the array element: [0] corresponds to a child node 0 in the tree having the array type variable: startCondition as the parent node".

In addition, in the second variable definition table 131B in (A) of FIG. 6, the array element: [1] of the array type variable: startCondition is stored as a child node of the tree having the array type variable: startCondition as the parent node. Besides, the element comment: "robot start condition" on the array element: [1] of the array type variable: startCondition is associated with the child node denoting the array element: [1] in the tree. In addition, the column of "explanation of node" provides that the array element: [1] corresponds to a child node 1 in the tree having the array type variable: startCondition as the parent node. The same is true of the array element: [2] of the array type variable: startCondition.

### (Element Comment Example 1 in Output List: Element Comment on Array Element)

As described above, the development support device 10 executes the following process when receiving a user operation indicating an instruction to execute the exporting process. That is, regarding a certain variable (first variable) selected in the above-described user operation, the development support device 10 individually identifies a plurality of second variables corresponding to descendant nodes in a tree having the certain variable as an ancestor node, with reference to the second variable definition table 131B. The development support device 10 acquires element comments on the plurality of respective identified second variables, with reference to the second variable definition table 131B. In addition, the development support device 10 acquires discrimination information for individually discriminating between the plurality of second variables, particularly, acquires path information from the first variable to each of the plurality of second variables in the tree having the first variable as an ancestor node, with reference to the second variable definition table 131B. The development support device 10 outputs the output list L1 obtained by associating element comments on the plurality of respective second variables with one character string containing the name of the first variable and the discrimination information (containing the path information from the first variable to each of the plurality of second variables) for individually discriminating between the plurality of second variables.

(B) of FIG. 6 illustrates an example in which the element comments on the respective array elements of the array type variable: startCondition illustrated in (A) of FIG. 6 are output in the output list L1. For example, when the array type variable: startCondition is selected by the user operation indicating the instruction to execute the exporting process, the development support device 10 executes the following process.

That is, the output unit 120 (particularly, first acquisition section 121) first identifies the name of the first variable selected by the user, that is, "startCondition" which is the name of the array type variable: startCondition.

For example, the output unit 120 (particularly, second acquisition section 122) identifies the plurality of second variables corresponding to the descendant nodes of the tree, by following the tree having the array type variable: startCondition as the ancestor node, with reference to the second variable definition table 131B. That is, the second acquisition section 122 identifies the array elements [0], [1], and [2] of the array type variable: startCondition. Besides, the output unit 120 acquires the discrimination information (that is, "0", "1", and "2") for individually discriminating between the plurality of second variables (for example, array elements [0], [1], or [2]), with respect to the first variable.

The output unit 120 (particularly, second acquisition section 122) generates path information for each of the array elements [0], [1], and [2] of the array type variable: startCondition, with reference to the second variable definition table 131B. The second acquisition section 122 identifies paths from the array type variable: startCondition which is the ancestor node to the respective array elements [0], [1], and [2] which are the descendant nodes in the tree having the array type variable: startCondition as the ancestor node. In other words, the second acquisition section 122 identifies one or more parent-child relationships from the array type variable: startCondition which is the ancestor node to the respective array elements [0], [1], and [2] which are the descendant nodes in the tree. The second acquisition section 122 generates path information indicating identified paths (one or more parent-child relationships). "The discrimination information for individually discriminating between the plurality of second variables with respect to the first variable" contains "the path information indicating paths from the first variable to the plurality of respective second variables in the tree having the first variable as the ancestor node".

In the example illustrated in FIG. 6, the variable having the variable name of "startCondition" is the array type variable, and the array elements of the array type variable: startCondition are the array elements [0], [1], and [2]. As described above, the second acquisition section 122 provides the parent-child relationships between the array type variable and the array elements, using brackets ([]), in the discrimination information (particularly, path information).

The second acquisition section 122 identifies that there is one parent-child relationship between the array type variable: startCondition and the array element [0], and the parent-child relationship is a parent-child relationship between an array type variable and an array element, with reference to the second variable definition table 131B. In addition, the second acquisition section 122 identifies "0" as information for discriminating the array element [0] from the other array elements ([1] and [2]) corresponding to the sibling nodes in the tree having the array type variable: startCondition as the parent node. Consequently, the second acquisition section 122 generates "[0]" as the discrimination information containing the path information for the array element [0]. Similarly, the second acquisition section 122 generates "[1]" as the discrimination information containing the path information for the array element [1] and generates "[2]" as the discrimination information containing the path information for the array element [2].

The path information represented by "[0]" indicates that an element variable associated with the path information is the array element of the first variable which is the array type variable and is discriminated by "0" from the other array elements of the first variable. Similarly, the path information represented by "[1]" indicates that an element variable associated with the path information is the array element of the first variable which is the array type variable and is discriminated by "1" from the other array elements of the first variable. In addition, the path information represented by "[2]" indicates that an element variable associated with the path information is the array element of the first variable which is the array type variable and is discriminated by "2" from the other array elements of the first variable.

The output unit 120 (particularly, character string generating section 124) generates one character string containing the name (startCondition) of the first variable and the discrimination information of the plurality of respective second variables. The character string generating section 124 generates one character string (that is, "startCondition[0]") containing "startCondition" and the discrimination information ([0]) of the array element [0], regarding the array element [0]. Similarly, the character string generating section 124 generates "startCondition[1]" regarding the array element [1] and generates "startCondition[2]" regarding the array element [2].

The output unit 120 (particularly, third acquisition section 123) acquires an element comment for each of the plurality of second variables (for example, array elements [0], [1], and [2]) corresponding to the descendant nodes of the tree having the first variable as the ancestor node, with reference to the second variable definition table 131B. Specifically, the third acquisition section 123 acquires an element comment: container start condition on the array element [0], with reference to the second variable definition table 131B. Similarly, the third acquisition section 123 acquires an element comment: robot start condition for the array element [1] and acquires an element comment: XXX start condition for the array element [2], with reference to the second variable definition table 131B.

Besides, the output unit 120 outputs the element comments on the plurality of respective second variables in the output list L1, by associating the element comments with "one character string containing the name of the first variable corresponding to the ancestor node and the discrimination information" of the plurality of respective second variables. As illustrated in (B) of FIG. 6, the output unit 120 outputs the element comment: container start condition on the array element: [0] in the output list L1, by associating the element comment with a comment name represented by "startCondition[0]". Similarly, the output unit 120 outputs the element comment: robot start condition on the array element: [1] in the output list L1, by associating the element comment with a comment name represented by "startCondition[1]". In addition, the output unit 120 outputs the element comment: XXX start condition on the array element: [2] in the output list L1, by associating the element comment with a comment name represented by "startCondition[2]".

### (Data Format Example 2 of Element Variables: Respective Structure Members of Structure Type Variable)

Similarly to FIG. 6, FIG. 7 illustrates an example ((A) of FIG. 7) of element variables which are stored in the second variable definition table 131B and an example ((B) of FIG. 7) of element comments on the element variables in the output list L1. Specifically, (A) of FIG. 7 illustrates an example in which element comments or the like on respective structure members are stored in the second variable definition table 131B, regarding the respective structure members of a structure type variable named "startCondition". In the example illustrated in (A) of FIG. 7, the structure members of the structure type variable named "startCondition" are Member1 and Member2.

The development support device 10 manages the structure members Member1 and Member2 of the structure type variable: startCondition as child nodes of a tree having the structure type variable: startCondition as a parent node. The structure members Member1 and Member2 corresponding to the sibling nodes of the tree are individually discriminated from other structure members corresponding to sibling nodes, by "Member1" or "Member2" in a hierarchy showing child nodes.

That is, in the second variable definition table 131B in (A) of FIG. 7, the structure member: Member1 of the structure type variable: startCondition is stored as a child node in a tree having the structure type variable: startCondition as a parent node. Besides, the element comment: "container start condition" on the structure member: Member1 of the structure type variable: startCondition is associated with the child node denoting the structure member: Member1 in the tree. In addition, the column of "explanation of node" provides that the structure member: Member1 corresponds to a child node in the tree having the structure type variable: startCondition as the parent node.

Similarly, in the second variable definition table 131B in (A) of FIG. 7, the structure member: Member2 of the structure type variable: startCondition is stored as a child node in the tree having the structure type variable: startCondition as the parent node. Besides, the element comment: "container start condition" on the structure member: Member2 of the structure type variable: startCondition is associated with the child node denoting the structure member: Member2 in the tree. In addition, the column of "explanation of node" provides that the structure member: Member2 corresponds to the child node in the tree having the structure type variable: startCondition as the parent node.

### (Element Comment Example 2 in Output List: Element Comment on Structure Member)

(B) of FIG. 7 illustrates an example in which the element comments on the respective structure members of the structure type variable: startCondition illustrated in (A) of FIG. 7 are output in the output list L1. For example, when the structure type variable: startCondition is selected by the user operation indicating the instruction to execute the exporting process, the development support device 10 executes the following process.

That is, the first acquisition section 121 identifies "startCondition" which is a name of the structure type variable: startCondition. The second acquisition section 122 individually identifies the plurality of second variables (for example, structure members Member1 and Member2) corresponding to descendant nodes of a tree having the first variable as an ancestor node, by following the tree having the first variable as the ancestor node with reference to the second variable definition table 131B. Besides, the output unit 120 acquires discrimination information (that is, Member1 or Member2) for individually discriminating between the plurality of second variables (for example, structure members Member1 and Member2) with respect to the first variable. The discrimination information contains path information.

In the example illustrated in FIG. 7, a variable named "startCondition" is the structure type variable, and the structure members of the structure type variable: startCondition are structure members Member1 and Member2. As described above, the second acquisition section 122 provides parent-child relationships between the structure type variable and the structure members, using a period (.), in the discrimination information (particularly, path information).

The second acquisition section 122 identifies that there is one parent-child relationship between the structure type variable: startCondition and the structure member Member1, and the parent-child relationship is a parent-child relationship between a structure type variable and a structure member, with reference to the second variable definition table 131B. In addition, the second acquisition section 122 identifies "Member1" as information for discriminating the structure member Member1 from the other structure member (Member2) corresponding to the sibling node in the tree having the structure type variable: startCondition as the parent node. Consequently, the second acquisition section 122 generates ".Member1" as the discrimination information containing the path information for the structure member Member1. Similarly, the second acquisition section 122 generates ".Member2" as the discrimination information containing the path information for the structure member Member2.

he path information represented by ".Member1" indicates that an element variable associated with the path information is the structure member of the first variable which is the structure type variable and is discriminated by "Member1" from the other structure member of the first variable. Similarly, the path information represented by ".Member2" indicates that an element variable associated with the path information is the structure member of the first variable which is the structure type variable and is discriminated by "Member2" from the other structure member of the first variable.

Regarding the structure member Member1, the character string generating section 124 generates the following one character string containing the name (startCondition) of the first variable and the discrimination information (.Member1) of the structure member Member1. That is, the character string generating section 124 generates one character string reading "startCondition.Member1" regarding the structure member Member1. Similarly, the character string generating section 124 generates one character string reading "startCondition.Member2" regarding the structure member Member2.

The output unit 120 (particularly, third acquisition section 123) acquires an element comment: container start condition for the structure member Member1 and acquires an element comment: robot start condition for the structure member Member2, with reference to the second variable definition table 131B.

Besides, as illustrated in (B) of FIG. 7, the output unit 120 outputs the element comment: container start condition on the structure member Member! in the output list L1, by associating the element comment with a comment name represented by "startCondition.Member1". Similarly, the output unit 120 outputs the element comment: robot start condition on the structure member Member2 in the output list L1, by associating the element comment with a comment name represented by "startCondition.Member2".

### (Data Format Example 3 of Element Variables: Members of Structure variables Which are Array Elements of Array Type Variable)

Similarly to FIGS. 6 and 7, FIG. 8 illustrates an example of the element variables which are stored in the second variable definition table 131B. Specifically, FIG. 8 illustrates an example in which element comments or the like on respective array elements and respective structure members are stored in the second variable definition table 131B, regarding an array type variable named "startCondition" in which structure type variables are array elements. In the example illustrated in FIG. 8, array elements (that is, [0] and [1]) of the array type variable: startCondition are the structure type variables, and the structure members of the respective array elements which are the structure type variables are Member1 and Member2.

The development support device 10 configures a tree in which the structure type variables [0] and [1] are hierarchized as child nodes, and the structure members Member1 and Member2 are hierarchized as grandchild nodes, with respect to the array type variable: startCondition corresponding to an ancestor node.

In addition, the development support device 10 individually discriminates between a plurality of element variables from other element variables corresponding to sibling nodes of the same hierarchy in the tree, using at least one of "0, 1, Member1, and Member2" as the discrimination information. For example, the development support device 10 distinguishes between the respective array elements [0] and [1] of the array type variable: startCondition, using "0" or "1" as the discrimination information. In addition, the development support device 10 distinguishes between the respective structure members Member1 and Member2 of the structure type variable [0], using "Member1" or "Member2" as the discrimination information. Further, the development support device 10 distinguishes between the element variables corresponding to four grandchild nodes of the tree, respectively, using discrimination information obtained by combining "0" or "1" and "Member1" or "Member2".

That is, as illustrated in FIG. 8, the array elements (that is, [0] and [1]) of the array type variable: startCondition are stored as child nodes of the tree having the array type variable: startCondition as the parent node, in the second variable definition table 131B. In the second variable definition table 131B, the array elements of the array type variable: startCondition are discriminated from each other using information ("0" or "1" in the example illustrated in FIG. 8) for discriminating between the respective array elements with respect to the array type variable. In the following description, the array elements [0] and [1] that are the array elements of the array type variable: startCondition in which the structure type variables are the array elements are referred to as the structure type variables [0] and [1], respectively, in some cases.

The structure members (that is, Member1 and Member2) of the structure type variable [0] are stored as child nodes of a tree having the structure type variable [0] as a parent node, in the second variable definition table 131B. In other words, the structure members of the structure type variable [0] are stored as grandchild nodes of a tree having the array type variable: startCondition as an ancestor node, in the second variable definition table 131B. In the second variable definition table 131B, the structure members of the structure type variable [0] are discriminated from each other using information ("Member1" or "Member2" in the example illustrated in FIG. 8) for discriminating between the structure members with respect to the structure type variable [0].

Similarly, the structure members (that is, Member1 and Member2) of the structure type variable [1] are stored as child nodes of a tree having the structure type variable [1] as a parent node, in the second variable definition table 131B. In other words, the structure members of the structure type variable [1] are stored as grandchild nodes of the tree having the array type variable: startCondition as an ancestor node, in the second variable definition table 131B. In the second variable definition table 131B, the structure members of the structure type variable [1] are discriminated from each other using information ("Member1" or "Member2" in the example illustrated in FIG. 8) for discriminating between the structure members with respect to the structure type variable [1].

The element comment: "start condition of stage A" on the array element: [0] of the array type variable: startCondition is associated with the child node denoting the array element: [0] in the tree. In addition, the column of "explanation of node" provides that the array element: [0] corresponds to a child node 0 in the tree having the array type variable: startCondition as the parent node.

Similarly, in the second variable definition table 131B in FIG. 8, the structure member: Member1 of the structure type variable [0] is stored as a child node of the tree having the structure type variable [0] as the parent node. In other words, in the second variable definition table 131B in FIG. 8, the structure member: Member1 of the structure type variable [0] is stored as a grandchild node of the tree having the array type variable: startCondition as the ancestor node. Besides, the element comment: "container start condition (stage A)" on the structure member: Member1 of the structure type variable [0] is associated with a node denoting the structure member: Member1 of the structure type variable [0] in the tree. In addition, the column of "explanation of node" provides that the structure member: Member1 of the structure type variable [0] corresponds to the child node in the tree having, as the parent node, the structure type variable which is the array element: [0].

### (Element Comment Example 3 in Output List: Members of Structure variables Which are Array Elements of Array Type Variable)

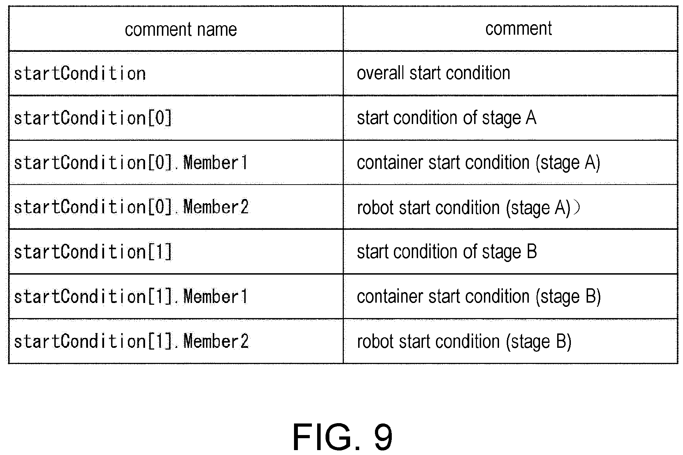

FIG. 9 illustrates an example of element comments on element variables in the output list L1. In particular, FIG. 9 illustrates an example in which element comments on a plurality of respective element variables that belong to "the array type variable (first variable) named 'startCondition' where the structure type variables are the array elements" illustrated in FIG. 8 are output in the output list L1. For example, when "the array type variable (first variable) named 'startCondition' where the structure type variables are the array elements" is selected by the user operation indicating the instruction to execute the exporting process, the development support device 10 executes the following process.

That is, the first acquisition section 121 identifies "startCondition" as the name of the first variable. The second acquisition section 122 individually identifies a plurality of second variables corresponding to descendant nodes of a tree having the first variable as the ancestor node, by following the tree having the first variable as the ancestor node with reference to the second variable definition table 131B. For example, the second acquisition section 122 identifies each of the array elements [0] and [1], the structure members Member1 and Member2 of the structure type variable [0], and further the structure members Member1 and Member2 of the structure type variable [1]. The second acquisition section 122 acquires discrimination information (containing path information of the plurality of respective second variables) for discriminating between the plurality of respective second variables.

For example, the second acquisition section 122 identifies that there is one parent-child relationship between the array type variable: startCondition and the array element [0], and the parent-child relationship is a parent-child relationship between an array type variable and an array element, with reference to the second variable definition table 131B. In addition, the second acquisition section 122 identifies "0" as information for discriminating the array element [0] from the other array element ([1]) corresponding to the sibling node in the tree having the array type variable: startCondition as the parent node. Consequently, the second acquisition section 122 generates "[0]" as the discrimination information containing the path information for the array element [0]. Similarly, the second acquisition section 122 generates "[1]" as the discrimination information containing the path information for the array element [1]. In addition, the second acquisition section 122 identifies "0" as information for discriminating the array element [0] from the other array element ([1]) corresponding to the sibling node in the tree having the array type variable: startCondition as the parent node. Consequently, the second acquisition section 122 generates "[0]" as the discrimination information containing the path information for the array element [0]. The path information represented by "[0]" indicates that an element variable associated with the path information is the array element of the first variable which is the array type variable and is discriminated by "0" from the other array element of the first variable.

Similarly, the second acquisition section 122 identifies that there are two parent-child relationships between the array type variable: startCondition and the structure member: Member1 of the structure type variable [0], with reference to the second variable definition table 131B.

That is, the second acquisition section 122 identifies that there is a first parent-child relationship in which the array type variable: startCondition is the parent node and the structure type variable [0] is the child node, and the first parent-child relationship is a parent-child relationship between an array type variable and an array element. Besides, the second acquisition section 122 identifies "0" as information for discriminating the array element [0] from the other array element ([1]) corresponding to the sibling node in the tree having the array type variable: startCondition as the parent node. Consequently, the second acquisition section 122 generates "[0]" as the discrimination information containing the path information for the array element [0].

In addition, the second acquisition section 122 identifies that there is a second parent-child relationship in which the structure type variable [0] is the parent node and the structure member: Member1 of the structure type variable [0] is the child node, and the second parent-child relationship is a parent-child relationship between a structure type variable and a structure member. Besides, the second acquisition section 122 identifies "Member1" as information for discriminating Member1 from the other structure member (Member2) corresponding to the sibling node in the tree having the structure type variable [0] as the parent node. Consequently, the second acquisition section 122 generates ".Member1" as the discrimination information containing the path information for the array element [0].

Consequently, the second acquisition section 122 generates the following character string as the discrimination information for discriminating the structure member: Member1 of the structure type variable [0] from the other sibling node, with respect to the array type variable: startCondition as the ancestor node. That is, the second acquisition section 122 generates "[0].Member1" as the discrimination information of the structure member: Member1 of the structure type variable [0].

The path information represented by "[0].Memberl" indicates that an element variable associated with the path information is the structure member of the array element [0] which is the array element of "the first variable having the structure type variable as the array element, that is, the array element [0] which is the structure type variable. In addition, the path information represented by "[0].Member1" indicates that the element variable associated with the path information is discriminated from the other sibling node of the tree having the first variable as the ancestor node, by using discrimination information containing "0" and "Member1" which are arranged in this order.

The character string generating section 124 generates one character string (that is, "startCondition[0]") containing "startCondition" which is the name of the first variable and the discrimination information ([0]) of the array element [0], regarding the array element [0]. In addition, the character string generating section 124 generates the following one character string containing "startCondition" and the discrimination information ([0].Member1) of the structure member: Member1 of the structure type variable [0], regarding the structure member: Member1 of the structure type variable [0]. That is, the character string generating section 124 generates "startCondition[0].Member1", regarding the structure member: Member1 of the structure type variable [0].

The third acquisition section 123 acquires the element comment: start condition of stage A on the array element [0], with reference to the second variable definition table 131B. Similarly, the third acquisition section 123 acquires the element comment: container start condition (stage A) on the structure member: Member1 of the structure type variable [0], with reference to the second variable definition table 131B.

As illustrated in FIG. 9, the output unit 120 outputs the element comment: start condition of stage A on the array element: [0] in the output list L1, by associating the element comment with a comment name represented by "startCondition[0]". Similarly, the output unit 120 outputs the element comment: container start condition (stage A) on the structure member: Member1 of the structure type variable [0] in the output list L1, by associating the element comment with a comment name represented by "startCondition[0] .Member1".

(Limitation on the Number of Element Comments Stored in One Output List) The development support device 10 (particularly, output unit 120) avoids increasing a data size of the output list L1 too much by constraining the number of element comments (that is, the number of element variables on which element comments are output) which are output in one output list L1.

For example, the output unit 120 sets the maximum number (predetermined value) in advance, regarding the number of element comments which are output in one output list L1. The output unit 120 outputs element comments to be output by dividing the element comments into a plurality of output lists L1 (for example, output lists L1(1), L1(2), L1(3), to L1(n)), when the number of element comments to be output is determined to exceed a maximum number.

That is, in the development support device 10, the output unit 120 may output the file (output list L1) by dividing the file into two or more files, when the total number of the second variables is larger than the predetermined value (maximum value).

According to this configuration, the development support device 10 outputs the file by dividing the file into two or more files, when the total number of the second variables is larger than the predetermined value. In other words, the development support device 10 outputs the file by dividing the file into two or more files, when determining that the total number of the second variables is larger than the predetermined value, and the file has too large a data size.

For example, the development support device 10 outputs the element comments attached to the plurality of respective second variables by dividing the element comments into the two or more files, when the total number of the plurality of second variables which belong to the common first variable is larger than the predetermined value. In addition, the development support device 10 outputs the element comments attached to the plurality of respective second variables by dividing the element comments into the two or more files, when the total number of the plurality of second variables of which a plurality of respective first variables are ancestor nodes is larger than the predetermined value, for example.

Here, when the total number of the second variables increases, it is needless to say that the data size of the file also increases. In addition, when the data size increases too much, it is difficult to open the file and check contents thereof or to edit the file.

Consequently, the development support device 10 achieves an effect of enabling the file to avoid having too large a data size to lower user convenience of the file, by dividing the file into two or more files.

Further, the output unit 120 may output, in one of the file, all of the element comments on the plurality of respective second variables which belong to the common first variable.

According to this configuration, the development support device 10 outputs, in one of the file, all of the element comments on the plurality of respective second variables which belong to the common first variable. Consequently, the element comments on the plurality of respective second variables which belong to the common first variable are divided into a plurality of files, and thus the development support device 10 achieves an effect of avoiding low recognizability and convenience for a user.

When the number of element comments on the plurality of respective element variables which belong to the common variable (first variable) corresponding to the ancestor node is equal to or smaller than the maximum number of lines, the output unit 120 outputs those "element comments on the plurality of respective element variables which belong to the common first variable" in one output list L1. In other words, the output unit 120 causes all of the element comments on the plurality of respective element variables which belong to the common variable corresponding to the ancestor node to be contained in one output list L1 and avoids dividing the element comments into a plurality of output lists L1. However, when the number of element comments on the plurality of respective element variables which belong to the common variable corresponding to the ancestor node exceeds the maximum number, the output unit 120 outputs those "element comments on the plurality of respective element variables which belong to the common first variable" in a plurality of output lists L1.

For example, when the element comments on the plurality of respective element variables are output in L1(m), the output unit 120 calculates "the number of remaining element comments" by subtracting "the number of element comments output in the output list L1(m)" from the maximum number, regarding the output list L1(m). Here, "m" is a natural number of "1" or larger. The output unit 120 compares "the number of element comments to be output in the output list L1(m)" with "the number of remaining element comments" calculated regarding the output list L1(m). When the output unit 120 determines that "the number of element comments to be output in the output list L1(m)" is smaller than "the number of remaining element comments", the output unit 120 switches an output destination file of the element comments to be output from the output list L1(m) to an output list L1(m+1).

### (Outline of Exporting Process)

The development support device 10 stores the map information 132 associated with contents of the respective "comment names" in the input list L2 and information indicating instances (node instances) of the plurality of respective element variables, in the storage unit 130 in advance. Similarly to "the comment names" in the output list L1, in "the comment names" in the input list L2, path information (containing the name of the first variable corresponding to the ancestor node) of the plurality of respective element variables corresponding to the descendant nodes is described.

Here, a naming rule of "the respective comment names" in the input list L2 is the same as the naming rule of "the comment names" in the output list L1. That is, "the comment name" contains a name of the variable (first variable) corresponding to the ancestor node and the discrimination information for discriminating between the plurality of respective second variables with respect to the first variable. The discrimination information contains "path information indicating paths from the first variable to the plurality of individual second variables in the tree having the first variable as the ancestor node". The path information is information for individually identifying one or more parent-child relationships which are found from the first variable to the plurality of individual second variables in the tree having the first variable as the ancestor node. When a variable corresponding to a parent node is an array type variable, and a variable corresponding to a child node is an element of the array type variable, the parent-child relationship is provided using brackets ([]) in the path information. In addition, when a variable corresponding to a parent node is a structure type variable, and a variable corresponding to a child node is a member of the structure type variable, the parent-child relationship is provided using a period (.).

"The information indicating instances of the plurality of respective element variables" in the input list L2 is information indicating "instances of a plurality of respective descendant nodes in the tree having the plurality of respective element variables as the descendant nodes". "The information indicating the instances of the plurality of respective element variables" can also be "information indicating relationships between the plurality of element variables (second variables) corresponding to the descendant nodes and the variable (first variable) corresponding to the ancestor node".

As described above, the development support device 10 may further include the input unit 140 and the comment updating unit 150. The input unit 140 imports a file instructed to be imported, when the operation receiving unit 110 (particularly, input instruction receiving section 112) receives the user operation indicating an instruction to import the data format file (input list L2) which is editable in at least one of a text editor and spreadsheet software, the file containing element comments on the respective second variables provided in association with the name of the first variable and the discrimination information. The comment updating unit 150 updates an element comment on each of the second variables stored in the storage unit 130, depending on the file imported by the input unit 140.

According to this configuration, the development support device 10 imports the input list L2 containing the element comments on the plurality of respective second variables provided in association with the name of the first variable and the discrimination information, in response to the user operation. Besides, the development support device 10 updates the element comment on each of the second variables stored in the storage unit 130, depending on the imported input list L2. In particular, the development support device 10 imports the element comment on each of the plurality of second variables so as to update the element comment on each of the second variables stored in the storage unit 130, the element comment being provided in the input list L2 in a form which enables a user to easily check contents thereof and easily edit the contents thereof.

Hence, the development support device 10 achieves an effect of enabling a user to easily manage and easily edit the element comment on each of the second variables which are used by the device, by using the input list L2.

In addition, a plurality of input lists L2 written in a plurality of languages, respectively, are prepared, and thereby, the development support device 10 can easily switch between languages of the element comment on each of the second variables which are used by the device, by updating the input list L2 to be imported.

For example, the user prepares in advance an input list L2(1) containing an element comment on a certain second variable written in English, an input list L2(2) written in Japanese, an input list L2(3) written in Chinese, and an input list L2(4) written in Spanish. The development support device 10 can use the element comment in English on the second variable by importing the input list L2(1) written in English or can use the element comment in Japanese on the second variable by importing the input list L2(2) written in Japanese. Similarly, the development support device 10 can use the element comment in Chinese on the second variable by importing the input list L2(3) written in Chinese or can use the element comment in Spanish on the second variable by importing the input list L2(4) written in Spanish.

That is, the development support device 10 achieves an effect of enabling a user to easily switch between languages of an element comment on the second variable (in an example described above, any languages of English, Japanese, Chinese, and Spanish of the element comment) in the device.

### (Details of Importing Process)

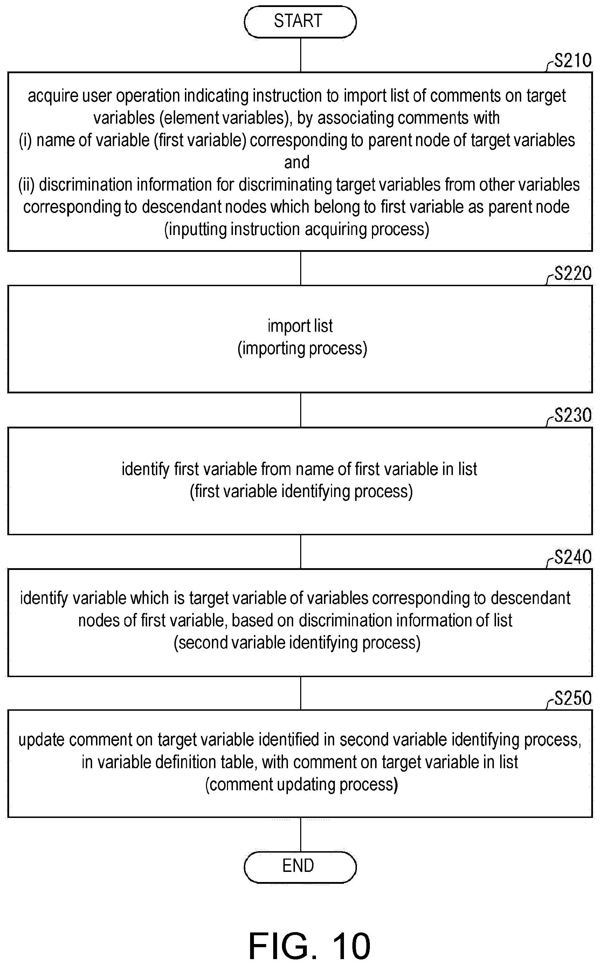

FIG. 10 is a flowchart illustrating an overall outline of an inputting process (importing) which is executed by the development support device 10. The input instruction receiving section 112 receives a user operation indicating an instruction to execute an importing process, that is, a user operation indicating an instruction to execute an inputting process of the input list L2 (input instruction acquiring process S210). In the input list L2, a comment (element comment) on a target variable which is the element variable is associated with a comment name. The comment name contains (i) a name of a variable (first variable) corresponding to the ancestor node of the target variable and (ii) discrimination information for discriminating the target variable from element variables corresponding to other descendant nodes in a tree having the first variable as the ancestor node.

When the input unit 140 imports the input list L2 (importing process S220), the comment updating unit 150 (particularly, character string analyzing section 151) extracts a name of the first variable from the comment name of the input list L2 and informs the first identification section 152 of the extracted name of the first variable. The first identification section 152 identifies the first variable from "the name of the first variable" extracted from the comment name of the input list L2 (first variable identifying process S230). The second identification section 153 identifies a variable which is a target variable, of variables corresponding to descendant nodes of the first variable, based on "the discrimination information" extracted from the comment name of the input list L2 (second variable identifying process S240). For example, the second identification section 153 acquires a "node instance" which is associated with "the comment name" of the input list L2 with reference to map information 132 and identifies the target variable in the second variable definition table 131B by using the acquired "node instance". In addition, the third identification section 154 identifies a comment (element comment) which is associated with the comment name of the input list L2, that is, acquires the element comment associated with the comment name from the input list L2.

The comment updating unit 150 updates the comment on the target variable identified in the second variable identifying process, in the second variable definition table 131B, with a comment on the target variable in the input list L2 (comment updating process S250). That is, the comment updating unit 150 updates the element comment on the target variable identified in the second variable identifying process, in the second variable definition table 131B, with the element comment acquired by the third identification section 154 from the input list L2.

### (Example of Map Information)

### (Regarding Variable Corresponding to Child Node of Tree Having First Variable as Ancestor (Parent) Node)

FIG. 11 is a diagram illustrating an example of the map information 132. As described above, the map information 132 is associated with the "comment name" and the "instance".

For example, a comment name of "startCondition[0]" contains "startCondition" which is the name of the variable (first variable) corresponding to the ancestor node and "[0]" which is the discrimination information for discriminating between the plurality of respective second variables with respect to the first variable. "[0]" immediately behind "startCondition" represents the following information. First, "[0]" indicates that the element variable associated with the comment name corresponds to a child node of a tree in which a variable (first variable) named "startCondition" is the ancestor node. Second, "[0]" indicates that the element variable associated with the comment name is an array element of the first variable (that is, the first variable is an array type variable). Third, "[0]" indicates that discrimination information for discriminating the element variable associated with the comment name from variables (other array elements) corresponding to other child nodes of the tree having the first variable as the parent node is "0".

The items of information indicated by the comment name of "startCondition[0]" is the same as the information represented by a node instance named "node of [0]" which is associated with the comment name in the map information 132. That is, the node instance named "node of [0]" indicates that a certain element variable corresponds to a child node of a certain first variable, particularly, is an array element of the certain first variable, and is discriminated from other array elements of the certain first variable by the discrimination information of "0".

### (Regarding Variable Corresponding to Grandchild Node of Tree Having First Variable as Ancestor Node)

Similarly, a comment name of "startCondition[1].Member2" contains "startCondition" which is a name of the variable (first variable) corresponding to the ancestor node. In addition, the comment name of "startCondition[1].Member2" contains "[1].Member2" as the discrimination information for discriminating the element variable associated with the comment name from variables corresponding to other descendant nodes in a tree having the first variable as the ancestor node.

"[1].Member2" immediately behind "startCondition" represents the following information. First, "[1].Member2" indicates that the element variable associated with the comment name corresponds to a grandchild node of the tree in which the variable (first variable) named "startCondition" is an ancestor node. Second, "[1].Member2" indicates that the element variable associated with the comment name is a structure member of a structure type variable which is an array element [1] of the first variable (that is, the first variable is an array type variable having the structure type variable as the array element).

Third, "[1].Member2" indicates that discrimination information for discriminating the element variable associated with the comment name from "variables corresponding to other grandchild nodes of the tree having the first variable as the ancestor node" is "1" and "Member2".

Specifically, the element variable associated with the comment name is discriminated from "the structure members of the structure type variable which is an array element [0] of the first variable" in that the element variable is "the structure member of the structure type variable which is the array element [1] of the first variable". That is, the element variable associated with the comment name is discriminated from "the variables corresponding to child nodes of a tree having the array element [0] of the first variable as a parent node" in that the array element [1] of the first variable is a parent node.

In addition, the element variable associated with the comment name is discriminated from "the other structure member (for example, Member1) of the structure type variable which is the array element [1] of the first variable" in that the element variable is "Member2 of the structure type variable which is the array element [1] of the first variable".

The items of information indicated by the comment name of "startCondition[1].Member2" is the same as the information represented by a node instance named "node of [1]-Member2" which is associated with the comment name in the map information 132. The node instance named "node of [1]-Member2" represents the following information. That is, the node instance named "node of [1]-Member2" indicates that a certain element variable corresponds to a grandchild node of a certain first variable and, particularly, is a structure member of a structure type variable which is an array element [1] of the certain first variable. In addition, the node instance named "node of [1]-Member2" indicates that the certain element variable is discriminated from variables corresponding to other grandchild nodes of the tree having the first variable as the ancestor node, by using the discrimination information of "1" and "Member2".

As described above, when the second identification section 153 does not have to necessarily refer to the map information 132, in identifying each of the element variables in the input list L2. The second identification section 153 may directly acquire discrimination information for discriminating between element variables having element comments stored in the input list L2, in the tree having the first variable as the ancestor node, from "the comment name" of the input list L2 without referring to the map information 132.

The "node instance" in the map information 132 may be associated with the "explanation of node" in the second variable definition table 131B.

### §4. Modification Example

As described above, an example is described, in which the first variable is the array type variable or the structure type variable, and the second variable is the array element or the structure member. However, the first variable does not have to be necessarily the array type variable or the structure type variable, and the second variable does not have to be necessarily the array element or the structure member. The second variable may be a variable which can be denoted as a descendant node in a tree having a first variable as an ancestor node.

### [Implementation Example by Software]

The functional blocks (specifically, the output unit 120, the input unit 140, and the comment updating unit 150) of the development support device 10 may be implemented by a logic circuit (hardware) formed into an integrated circuit (IC chip) or the like or may be implemented by software using a central processing unit (CPU).

In the latter case, the development support device 10 includes the CPU that executes an instruction of a program serving as software which realizes the functions, a read only memory (ROM) or a storage device (both are called a "recording medium") in which the program and various types of data are stored to be readable by a computer (or CPU), a random access memory (RAM) that expands the program, or the like. Besides, the computer (or CPU) reads the program from the recording medium and executes the program, thereby achieving the object of the present invention. A "non-transitory tangible medium" such as a tape, a disk, a card, a semiconductor memory, or a programmable logic circuit can be used as the recording medium. In addition, the program may be supplied to the computer via any transmission medium (communication network, broadcast wave, or the like) which can transfer the program. Moreover, the present invention can also be implemented in a form of a data signal embodied by electronic transmission of the program, the data signal being embedded in a carrier wave.

### (Appendix)

The development support device according to an aspect of the present invention supports a user to write a program executed by a controller, the development support device including: an operation receiving unit that receives a user operation indicating an instruction to perform an external output of comments on variables used in the program, the comments being optionally attachable together with definitions of the variables by the user; and an output unit that outputs a comment on each of a plurality of second variables of the variables as a data format file which is editable in at least one of a text editor and spreadsheet software, the second variables being denotable as a descendant node in a tree data structure having a first variable as an ancestor node, by associating the comment with a name of the first variable and discrimination information for individually discriminating between the plurality of second variables with respect to the first variable, when the operation receiving unit receives the user operation.

According to this configuration, the development support device outputs the comment on each of the plurality of second variables as a data format file which is editable in at least one of the text editor and the spreadsheet software, by associating the comment with the name of the first variable and the discrimination information.

Consequently, the development support device achieves an effect of enabling a list of comments on the plurality of respective second variables to be output in a form which is easily checked and easily edited by a user. In other words, the development support device achieves an effect of enabling the user to easily check and easily edit the comments on the plurality of respective second variables.

In addition, the development support device outputs the comments as a data format file which is editable by the user in spreadsheet software or the like, thus, achieving an effect of enabling the user to write and manage the comments in each of a plurality of languages using the file. That is, the development support device achieves an effect of enabling the user to easily generate and easily manage the comments written in each of the plurality of languages on the plurality of respective second variables.

In the development support device according to the aspect of the present invention, the first variable may be an array type variable or a structure type variable, and each of the plurality of second variables may be an array element of the array type variable or a member of the structure type variable.

According to this configuration, the development support device outputs the comment on each of the plurality of second variables which are array elements of the array type variable or members of the structure type variable, by associating the comment with the discrimination information and the name of the first variable which is the array type variable or the structure type variable.

Consequently, the development support device achieves an effect of enabling a list of comments on the plurality of respective second variables which are the array elements of the array type variable or the members of the structure type variable to be output in a form which is easily checked and easily edited by a user.

In the development support device according to the aspect of the present invention, the output unit may output the comment on each of the plurality of second variables by associating the comment with one character string containing the name of the first variable and the discrimination information.

According to this configuration, the development support device outputs the comment on each of the plurality of second variables as a data format file which is editable in the spreadsheet software or the like, by associating the comment with one character string containing the name of the first variable and the discrimination information. For example, the development support device outputs a list showing (A) the one character string containing the name of the first variable and the discrimination information and (B) the comment, in a data format which is editable in the spreadsheet software or the like.

Specifically, the development support device outputs the comment on each of the plurality of second variables as a data format file which is editable in the spreadsheet software, for example, by associating the comment with one character string containing the name of the first variable and the discrimination information. In this case, the one character string containing the name of the first variable and the discrimination information is stored in one cell, and the comment on each of the plurality of second variables is also stored in one cell. Hence, a user can check, at a glance, a relationship between the comment on each of the plurality of second variables, the second variable to which the comment is attached, and the first variable which is an ancestor node of the second variable. For example, the user is able to check, at a glance, the list formed by associating the one character string containing the name of the first variable and the discrimination information with one character string indicating the comment.

Consequently, the development support device achieves an effect of enabling a list of comments on the plurality of respective second variables to be output in a form which is very highly recognizable and easily edited by a user.

In the development support device according to the aspect of the present invention, the discrimination information contains path information indicating a path from the first variable to each of the plurality of second variables in the tree data structure. The path information provides each of one or more parent-child relationships from the first variable to each of the plurality of second variables in the tree data structure, using (1) brackets ([]), when a variable corresponding to a parent node is an array type variable and a variable corresponding to a child node is an array element of the array type variable, and using (2) a period (.), when a variable corresponding to a parent node is a structure type variable and a variable corresponding to a child node is a member of the structure type variable.

According to this configuration, the development support device outputs the comment on each of the plurality of second variables in association with the discrimination information containing the path information and the name of the first variable. Besides, regarding each of one or more parent-child relationships from the first variable to the plurality of respective second variables, the path information distinguishes whether a parent and a child are an array type variable and an array element of the array type variable, respectively, or the parent and the child are a structure type variable and a member of the structure type variable, respectively.

Consequently, the development support device achieves an effect of enabling the file to be output in a state where a user can check a relationship between the first variable and the plurality of second variables. For example, the development support device achieves an effect of enabling the file to be output in a state where a user can distinguish whether the second variables are array elements of the first variable which is the array type variable, the second variables are members of the first variable which is the structure type variable, the second variables are members of a predetermined structure type variable of the first variable which is an array type variable (structure type array) in which each of a plurality of structure type variables is an array element, or the like.

In the development support device according to the aspect of the present invention, the output unit may output the file by dividing the file into two or more files, when the total number of the second variables is larger than a predetermined value.

According to this configuration, the development support device outputs the file by dividing the file into two or more files, when the total number of the second variables is larger than the predetermined value. In other words, the development support device outputs the file by dividing the file into two or more files, when determining that the total number of the second variables is larger than the predetermined value, and the file has too large a data size.

For example, the development support device outputs the comments attached to the plurality of respective second variables by dividing the comments into the two or more files, when the total number of the plurality of second variables which belong to the common first variable is larger than the predetermined value. In addition, the development support device outputs the comments attached to the plurality of respective second variables by dividing the comments into the two or more files, when the total number of the plurality of second variables of which a plurality of respective first variables are ancestor nodes, respectively is larger than the predetermined value, for example.

Here, when the total number of the second variables increases, it is needless to say that the data size of the file also increases. In addition, when the data size increases too much, it is difficult to open the file and check contents thereof or to edit the file.

Consequently, the development support device achieves an effect of enabling the file to avoid having too large a data size to lower user convenience of the file, by dividing the file into two or more files.

In the development support device according to the aspect of the present invention, the output unit may output, in one of the file, all of the comments on the plurality of respective second variables which belong to the common first variable.

According to this configuration, the development support device outputs, in one of the file, all of the comments on the plurality of respective second variables which belong to the common first variable. Consequently, the comments on the plurality of respective second variables which belong to the common first variable are divided into a plurality of files, and thus the development support device achieves an effect of avoiding low recognizability and convenience for a user.

The development support device according to the aspect of the present invention may further include an input unit that imports a file instructed to be imported, when the operation receiving unit receives a user operation indicating an instruction to import the data format file which is editable in at least one of a text editor and spreadsheet software, the file containing comments on the respective second variables provided in association with the name of the first variable and the discrimination information; and a comment updating unit that updates a comment on each of the second variables stored in a storage unit, depending on the file imported by the input unit.

According to this configuration, the development support device imports the file containing the comment on each of the plurality of second variables provided in association with the name of the first variable and the discrimination information, in response to the user operation. Besides, the development support device updates the comment on each of the second variables stored in the storage unit, depending on the imported file. In particular, the development support device imports the comment on each of the plurality of second variables so as to update the comment on each of the second variables stored in the storage unit, the comment being provided as a data format file which enables a user to easily check contents thereof and easily edit the contents thereof.

Hence, the development support device achieves an effect of enabling a user to easily manage and easily edit the comment on each of the second variables which are used by the device, using the file.

In addition, the plurality of files written in a plurality of languages are prepared respectively, and thereby, the development support device can easily switch between languages of the comment on each of the second variables which are used by the device, by updating the files to be imported.

For example, the user prepares in advance a file containing a comment on a certain second variable written in English, another file written in Japanese, still another file written in Chinese, and still another file written in Spanish. The development support device can use the comment in English on the second variable by importing the file written in English, or can use the comment in Japanese on the second variable by importing the file written in Japanese. Similarly, the development support device can use the comment in Chinese on the second variable by importing the file written in Chinese, or can use the comment in Spanish on the second variable by importing the file written in Spanish.

That is, the development support device achieves an effect of enabling easy switching between languages of a comment on the second variable (in the example described above, any languages of English, Japanese, Chinese, and Spanish of the comment) in the device.

A control method according to another aspect of the present invention is a method for controlling a development support device that supports a user to write a program executed by a controller, the control method including an operation receiving step of receiving a user operation indicating an instruction to perform an external output of comments on variables used in the program, the comments being optionally attachable together with definitions of the variables by a user; and an outputting step of outputting a comment on each of a plurality of second variables of the variables as a data format file which is editable in at least one of a text editor and spreadsheet software, the second variables being denotable as a descendant node in a tree data structure having a first variable as an ancestor node, by associating the comment with a name of the first variable and discrimination information for individually discriminating between the plurality of second variables with respect to the first variable, when the user operation is received in the operation receiving step.

According to this configuration, in the control method, the comments on the plurality of respective second variables are associated with the name of the first variable and the discrimination information and are output as a data format file which is editable in at least one of the text editor and the spreadsheet software.

Consequently, the control method achieves an effect of enabling a list of comments on the plurality of respective second variables to be output in a form which is easily checked and easily edited by a user. In other words, the control method achieves an effect of enabling a user to easily check and easily edit the comments on the plurality of respective second variables.

In addition, the comments are output as a data format file which is editable by a user in the spreadsheet software or the like, and thus the control method achieves an effect of enabling the user to write and manage the comments in each of a plurality of languages using the file. That is, the control method achieves an effect of enabling a user to easily generate-manage the comments written in each of the plurality of languages on the plurality of respective second variables.

### [Reference Signs List]

- 10: development support device
- 20: PLC (controller)
- 110: operation receiving unit
- 120: output unit
- 130: storage unit
- 140: input unit
- 150: comment updating unit
- S110: output instruction acquiring process (operation receiving step)
- S160: exporting process (outputting step)

## Claims

1. A development support device (10) that supports a user to write a program executed by a controller (20), the development support device (10), **characterized by**, comprising:
an operation receiving unit (110) that receives a user operation indicating an instruction to output comments on target variables used in the program, the comments being able to be attached to definitions of the variables by a user; and
an output unit (120) that acquires a name of a first variable corresponding to ancestor node of the target variables, acquires discrimination information of discriminating the target variables from a plurality of second variables corresponding to other descendant nodes of which an ancestor node is the first variable, acquires the comments on the target variables, generates one character string combined with the name of the first variable and the discrimination information, and outputs a list formed by associating the comments on the target variables with the character string as a file with a data format which is editable in at least one of a text editor and spreadsheet software,
wherein the first variable is an array type variable or a structure type variable,
wherein each of the plurality of second variables is an element of the array type variable or a member of the structure type variable,
wherein the discrimination information includes path information indicating a path from the first variable to each of the plurality of second variables in the tree data structure, and
wherein the path information provides each of one or more parent-child relationships from the first variable to each of the plurality of second variables in the tree data structure by using
brackets, when a variable corresponding to a parent node is an array type variable and a variable corresponding to a child node is an element of the array type variable, and
a period, when a variable corresponding to a parent node is a structure type variable and a variable corresponding to a child node is a member of the structure type variable.

2. The development support device (10) according to claim 1,
wherein the output unit (120) outputs the comment on each of the plurality of second variables by associating the comment with one character string containing the name of the first variable and the discrimination information.

3. The development support device (10) according to claim 1 or 2,
wherein the output unit (120) outputs the file by dividing the file into two or more files, when the total number of the second variables is larger than a predetermined value.

4. The development support device (10) according to claim 1 or 2,
wherein the output unit (120) outputs, in one of the file, all comments on the plurality of second variables which belong to the common first variable.

5. The development support device (10) according to any one of claims 1 to 4, further comprising:
an input unit (140) that imports a file instructed to be imported, when the operation receiving unit (110) receives a user operation indicating an instruction to import the data format file which is editable in at least one of a text editor and spreadsheet software, the file containing comments on the respective second variables provided in association with the name of the first variable and the discrimination information; and
a comment updating unit (150) that updates a comment on each of the second variables stored in a storage unit (130), depending on the file imported by the input unit (140).

6. A method for controlling a development support device (10) that supports a user to write a program executed by a controller (20), the method, **characterized by**, comprising:
an operation receiving step of receiving a user operation indicating an instruction to output comments on target variables used in the program, the comments being able to be attached to definitions of the variables by a user; and
an outputting step of acquiring a name of a first variable corresponding to ancestor node of the target variables, acquiring discrimination information of discriminating the target variables from a plurality of second variables corresponding to other descendant nodes of which an ancestor node is the first variable, acquires the comments on the target variables, generating one character string combined with the name of the first variable and the discrimination information, and outputting a list formed by associating the comments on the target variables with the character string as a file with a data format which is editable in at least one of a text editor and spreadsheet software,
wherein the first variable is an array type variable or a structure type variable,
wherein each of the plurality of second variables is an element of the array type variable or a member of the structure type variable,
wherein the discrimination information includes path information indicating a path from the first variable to each of the plurality of second variables in the tree data structure, and
wherein the path information provides each of one or more parent-child relationships from the first variable to each of the plurality of second variables in the tree data structure by using
brackets, when a variable corresponding to a parent node is an array type variable and a variable corresponding to a child node is an element of the array type variable, and
a period, when a variable corresponding to a parent node is a structure type variable and a variable corresponding to a child node is a member of the structure type variable.

7. A computer program for causing a computer to function as the development support device (10) according to any one of claims 1 to 5, the information processing program causing a computer to function as the units.

8. A computer-readable recording medium having the computer program according to claim 7 recorded therein.

## Patentansprüche

1. Entwicklungsunterstützungsvorrichtung (10), die einen Benutzer unterstützt, um ein Programm, ausgeführt von einer Steuerung (20), zu schreiben, wobei die Entwicklungsunterstützungsvorrichtung (10) **dadurch gekennzeichnet ist, dass** sie umfasst:
eine Operationsempfangseinheit (110), die eine Benutzeroperation empfängt, die eine Anweisung zur Ausgabe von Kommentaren zu Zielvariablen, verwendet in dem Programm, anzeigt, wobei die Kommentare an Definitionen der Variablen durch einen Benutzer angehängt werden können; und
eine Ausgabeeinheit (120), die einen Namen einer ersten Variablen, die einem Vorgängerknoten der Zielvariablen entspricht, erfasst, Unterscheidungsinformationen zum Unterscheiden der Zielvariablen von einer Vielzahl von zweiten Variablen, die anderen Nachfolgeknoten entsprechen, deren Vorgängerknoten die erste Variable ist, erfasst, die Kommentare zu den Zielvariablen erfasst, eine Zeichenkette erzeugt, die mit dem Namen der ersten Variablen und der Unterscheidungsinformation kombiniert ist, und eine Liste ausgibt, die durch Verknüpfen der Kommentare zu den Zielvariablen mit der Zeichenkette als eine Datei mit einem Datenformat gebildet wird, das in mindestens einem Texteditor oder einer Tabellenkalkulationssoftware editierbar ist,
wobei die erste Variable eine Variable vom Typ Array oder eine Variable vom Typ Struktur ist,
wobei jede der Vielzahl von zweiten Variablen ein Element der Variablen vom Array-Typ oder ein Element der Variablen vom Struktur-Typ ist,
wobei die Unterscheidungsinformationen Pfadinformationen enthalten, die einen Pfad von der ersten Variablen zu jeder der Vielzahl von zweiten Variablen in der Baumdatenstruktur anzeigen, und
wobei die Pfadinformation jede von einer oder mehreren Eltern-Kind-Beziehungen von der ersten Variablen zu jeder der Vielzahl von zweiten Variablen in der Baumdatenstruktur durch Verwendung von
Klammern, wenn eine Variable, die einem Eltern-Knoten entspricht, eine Variable vom Array-Typ ist und eine Variable, die einem Kind-Knoten entspricht, ein Element der Variablen vom Array-Typ ist, und
eine Zeitspanne, wenn eine Variable, die einem Eltern-Knoten entspricht, eine Variable vom Strukturtyp ist und eine Variable, die einem Kind-Knoten entspricht, ein Element der Variablen vom Strukturtyp ist.

2. Entwicklungsunterstützungsvorrichtung (10) gemäß Anspruch 1,
wobei die Ausgabeeinheit (120) den Kommentar zu jeder der Vielzahl von zweiten Variablen ausgibt, indem sie den Kommentar mit einer Zeichenkette verknüpft, die den Namen der ersten Variablen und die Unterscheidungsinformation enthält.

3. Entwicklungsunterstützungsvorrichtung (10) gemäß Anspruch 1 oder 2,
wobei die Ausgabeeinheit (120) die Datei ausgibt, indem sie die Datei in zwei oder mehr Dateien aufteilt, wenn die Gesamtzahl der zweiten Variablen größer als ein vorbestimmter Wert ist.

4. Entwicklungsunterstützungsvorrichtung (10) gemäß Anspruch 1 oder 2,
wobei die Ausgabeeinheit (120) in einer der Dateien alle Kommentare zu der Vielzahl der zweiten Variablen ausgibt, die zu der gemeinsamen ersten Variablen gehören.

5. Entwicklungsunterstützungsvorrichtung (10) gemäß einem der Ansprüche 1 bis 4, ferner umfassend:
eine Eingabeeinheit (140), die eine zu importierende Datei importiert, wenn die Operationsempfangseinheit (110) eine Benutzeroperation empfängt, die eine Anweisung zum Importieren der Datenformatdatei anzeigt, die in mindestens einem von einem Texteditor und einer Tabellenkalkulationssoftware editierbar ist, wobei die Datei Kommentare zu den jeweiligen zweiten Variablen enthält, die in Verbindung mit dem Namen der ersten Variablen und der Diskriminierungsinformation bereitgestellt werden; und
eine Kommentaraktualisierungseinheit (150), die einen Kommentar zu jeder der zweiten Variablen, die in einer Speichereinheit (130) gespeichert sind, in Abhängigkeit von der durch die Eingabeeinheit (140) importierten Datei aktualisiert.

6. Verfahren zum Steuern einer Entwicklungsunterstützungsvorrichtung (10), die einen Benutzer unterstützt, ein Programm, ausgeführt von einer Steuerung (20), zu schreiben, wobei das Verfahren **dadurch gekennzeichnet ist, dass** es umfasst:
einen Operationsempfangsschritt des Empfangens einer Benutzeroperation, die eine Anweisung zur Ausgabe von Kommentaren zu in dem Programm verwendeten Zielvariablen anzeigt, wobei die Kommentare von einem Benutzer an Definitionen der Variablen angehängt werden können; und
einen Ausgabeschritt des Erfassens eines Namens einer ersten Variablen, die einem Vorgängerknoten der Zielvariablen entspricht, des Erfassens von Unterscheidungsinformationen zum Unterscheiden der Zielvariablen von einer Vielzahl von zweiten Variablen, die anderen Nachfolgeknoten entsprechen, deren Vorgängerknoten die erste Variable ist, des Erfassens der Kommentare zu den Zielvariablen, Erzeugen einer Zeichenkette, die mit dem Namen der ersten Variablen und der Unterscheidungsinformation kombiniert ist, und Ausgeben einer Liste, die durch Verknüpfen der Kommentare zu den Zielvariablen mit der Zeichenkette gebildet wird, als eine Datei mit einem Datenformat, das in mindestens einem Texteditor oder einer Tabellenkalkulationssoftware editierbar ist,
wobei die erste Variable eine Variable vom Typ Array oder eine Variable vom Typ Struktur ist,
wobei jede der Vielzahl von zweiten Variablen ein Element der Variablen vom Array-Typ oder ein Element der Variablen vom Struktur-Typ ist,
wobei die Unterscheidungsinformationen Pfadinformationen enthalten, die einen Pfad von der ersten Variablen zu jeder der Vielzahl von zweiten Variablen in der Baumdatenstruktur anzeigen, und
wobei die Pfadinformation jede von einer oder mehreren Eltern-Kind-Beziehungen von der ersten Variablen zu jeder der Vielzahl von zweiten Variablen in der Baumdatenstruktur durch Verwendung von
Klammern, wenn eine Variable, die einem Eltern-Knoten entspricht, eine Variable vom Array-Typ ist und eine Variable, die einem Kind-Knoten entspricht, ein Element der Variablen vom Array-Typ ist, und
eine Zeitspanne, wenn eine Variable, die einem Eltern-Knoten entspricht, eine Variable vom Strukturtyp ist und eine Variable, die einem Kind-Knoten entspricht, ein Element der Variablen vom Strukturtyp ist.

7. Computerprogramm zum Veranlassen eines Computers um als die Entwicklungsunterstützungsvorrichtung (10) gemäß einem der Ansprüche 1 bis 5 zu arbeiten, wobei das Informationsverarbeitungsprogramm einen Computer veranlasst, als die Einheiten zu arbeiten.

8. Computerlesbares Aufzeichnungsmedium, das das Computerprogramm gemäß Anspruch 7 aufweist, das darin aufgezeichnet ist.

## Revendications

1. Dispositif d'aide au développement (10) qui aide un utilisateur à écrire un programme exécuté par un dispositif de commande (20), le dispositif d'aide au développement (10) étant **caractérisé en ce qu'**il comprend :
une unité de réception d'opération (110) qui reçoit une opération d'utilisateur indiquant une instruction pour délivrer des commentaires sur des variables cibles utilisées dans le programme, les commentaires étant aptes à être attachés à des définitions des variables par un utilisateur ; et
une unité de sortie (120) qui acquiert un nom d'une première variable correspondant à un nœud ancêtre des variables cibles, acquiert des informations de discrimination pour discriminer les variables cibles d'une pluralité de deuxièmes variables correspondant à d'autres noeuds descendants dont un noeud ancêtre est la première variable, acquiert les commentaires sur les variables cibles, génère une chaîne de caractères combinée avec le nom de la première variable et les informations de discrimination, et délivre une liste formée par l'association des commentaires sur les variables cibles à la chaîne de caractères sous forme d'un fichier avec un format de données qui est modifiable dans au moins l'un d'un éditeur de texte et d'un tableur,
dans lequel la première variable est une variable de type réseau ou une variable de type structure,
dans lequel chacune de la pluralité de deuxièmes variables est un élément de la variable de type réseau ou un membre de la variable de type structure,
dans lequel les informations de discrimination comprennent des informations de trajet indiquant un trajet de la première variable à chacune de la pluralité de deuxièmes variables dans la structure d'arborescence de données, et
dans lequel les informations de trajet fournissent chacune d'une ou plusieurs relations parents-enfants de la première variable à chacune de la pluralité de deuxièmes variables dans la structure d'arborescence de données à l'aide
de crochets, lorsqu'une variable correspondant à un noeud parent est une variable de type réseau et une variable correspondant à un noeud enfant est un élément de la variable de type réseau, et
d'un point, lorsqu'une variable correspondant à un noeud parent est une variable de type structure et une variable correspondant à un nceud enfant est un membre de la variable de type structure.

2. Dispositif d'aide au développement (10) selon la revendication 1,
dans lequel l'unité de sortie (120) délivre le commentaire sur chacune de la pluralité de deuxièmes variables par l'association du commentaire à une chaîne de caractères contenant le nom de la première variable et les informations de discrimination.

3. Dispositif d'aide au développement (10) selon la revendication 1 ou 2,
dans lequel l'unité de sortie (120) délivre le fichier par la division du fichier en deux fichiers ou plus, lorsque le nombre total des deuxièmes variables est supérieur à une valeur prédéterminée.

4. Dispositif d'aide au développement (10) selon la revendication 1 ou 2,
dans lequel l'unité de sortie (120) délivre, dans l'un des fichiers, tous les commentaires sur la pluralité de deuxièmes variables appartenant à la première variable commune.

5. Dispositif d'aide au développement (10) selon l'une quelconque des revendications 1 à 4, comprenant en outre :
une unité d'entrée (140) qui importe un fichier dont l'importation est ordonnée, lorsque l'unité de réception d'opération (110) reçoit une opération d'utilisateur indiquant une instruction pour importer le fichier de format de données qui est modifiable dans au moins l'un d'un éditeur de texte et d'un tableur, le fichier contenant des commentaires sur les deuxièmes variables respectives fournis en association avec le nom de la première variable et les informations de discrimination ; et
une unité de mise à jour de commentaire (150) qui met à jour un commentaire sur chacune des deuxièmes variables stockées dans une unité de stockage (130), en fonction du fichier importé par l'unité d'entrée (140).

6. Procédé de commande d'un dispositif d'aide au développement (10) qui aide un utilisateur à écrire un programme exécuté par un dispositif de commande (20), le procédé étant **caractérisé en ce qu'**il comprend :
une étape de réception d'opération consistant à recevoir une opération d'utilisateur indiquant une instruction pour délivrer des commentaires sur des variables cibles utilisées dans le programme, les commentaires étant aptes à être attachés à des définitions des variables par un utilisateur ; et
une étape de sortie consistant à acquérir un nom d'une première variable correspondant à un noeud ancêtre des variables cibles, acquérir des informations de discrimination pour discriminer les variables cibles d'une pluralité de deuxièmes variables correspondant à d'autres noeuds descendants dont un noeud ancêtre est la première variable, acquérir les commentaires sur les variables cibles, générer une chaîne de caractères combinée avec le nom de la première variable et les informations de discrimination, et délivrer une liste formée par l'association des commentaires sur les variables cibles à la chaîne de caractères sous forme d'un fichier avec un format de données qui est modifiable dans au moins l'un d'un éditeur de texte et d'un tableur,
dans lequel la première variable est une variable de type réseau ou une variable de type structure,
dans lequel chacune de la pluralité de deuxièmes variables est un élément de la variable de type réseau ou un membre de la variable de type structure,
dans lequel les informations de discrimination comprennent des informations de trajet indiquant un trajet de la première variable à chacune de la pluralité de deuxièmes variables dans la structure d'arborescence de données, et
dans lequel les informations de trajet fournissent chacune d'une ou plusieurs relations parents-enfants de la première variable à chacune de la pluralité de deuxièmes variables dans la structure d'arborescence de données à l'aide
de crochets, lorsqu'une variable correspondant à un noeud parent est une variable de type réseau et une variable correspondant à un noeud enfant est un élément de la variable de type réseau, et
d'un point, lorsqu'une variable correspondant à un noeud parent est une variable de type structure et une variable correspondant à un noeud enfant est un membre de la variable de type structure.

7. Programme informatique pour amener un ordinateur à fonctionner en tant que le dispositif d'aide au développement (10) selon l'une quelconque des revendications 1 à 5, le programme informatique amenant un ordinateur à fonctionner en tant que les unités.

8. Support d'enregistrement lisible par ordinateur sur lequel est enregistré le programme informatique selon la revendication 7.
